# EUROPEAN PATENT SPECIFICATION

(11) **EP 0 576 290 B1**
(45) Date of publication and mention of the grant of the patent: **20.01.1999**
(21) Application number: 93304968.6
(22) Date of filing: 24.06.1993
(51) Int. Cl.: H04N 7/32

(54) **Picture signal coding and decoding**
Kodierung und Dekodierung von Bildsignalen
Codage et décodage de signaux d'image

(30) Priority: 25.06.1992 JP 191576/92; 26.10.1992 JP 287179/92
(43) Date of publication of application: 29.12.1993
(73) Proprietor: SONY CORPORATION, Tokyo (JP)
(72) Inventor: Obikane, Nobuhisa, c/o Patents Division, Shinagawa-ku, Tokyo 141 (JP); Tahara, Katsumi, c/o Patents Division, Shinagawa-ku, Tokyo 141 (JP); Yagasaki, Yoichi, c/o Patents Division, Shinagawa-ku, Tokyo 141 (JP); Yonemitsu, Jun, c/o Patents Division, Shinagawa-ku, Tokyo 141 (JP); Suzuki, Teruhiko, c/o Patents Division, Shinagawa-ku, Tokyo 141 (JP)
(74) Representative: Robinson, Nigel Alexander Julian

(56) References cited:
- EP-A- 0 535 272
- WO-A-92/06563
- SIGNAL PROCESSING OF HDTV, 4 September 1991, TURIN, IT pages 353 - 360, XP000379972 DUFOUR ET AL 'A HDTV compatible coding scheme for distribution purposes'
- SIGNAL PROCESSING. IMAGE COMMUNICATION, vol.4, no.4/5, August 1992, AMSTERDAM NL pages 325 - 344, XP000293752 TUORTIER ET AL 'Motion compensated subband coding schemes for compatible high definition TV coding'

## Description

This invention relates to picture signal coding and decoding methods and picture signal coding and decoding apparatus which may, for example, be used to compress and record a high quality picture signal, such as a signal of high definition television (high definition television (HDTV) signal), onto a recording medium such as an optical disk, a magneto-optical disk or a magnetic tape and subsequently to reproduce, decompress and display the thus recorded signal.

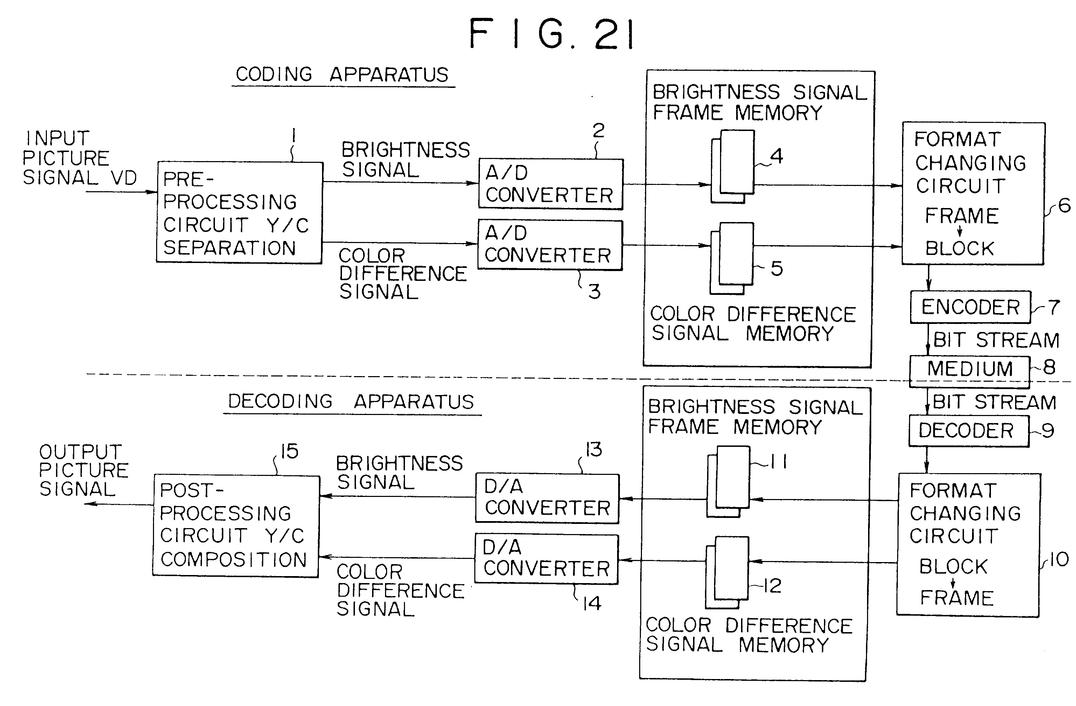

Various picture signal coding apparatus and decoding apparatus are already known, and general constructions of exemplary ones of conventional picture signal coding and decoding apparatus are shown in Figure 21. Referring to Figure 21, a pre-processing circuit 1 of the coding apparatus shown receives an input picture signal such as, for example, a high definition television signal and separates the input picture signal into a brightness signal component (Y) and a colour difference signal component (C). The brightness signal component is converted from an analog signal into a digital signal by an analog to signal (A/D) converter 2 and is written into a frame memory 4 once while the colour difference signal component is converted from an analog signal into a digital signal by another analog to digital (A/D) converter 3 and is written into another frame memory 5 once. A format change circuit 6 changes the formats of the brightness data and the colour difference data stored in the frame memories 4 and 5 to change the data from data in units of a frame to data in units of a block. The data in units of a block obtained by the format changing are supplied to and encoded by an encoder 7, and then supplied as a bit stream to and recorded onto a recording medium 8 in the form of an optical disk, a magneto-optical disk or a magnetic tape.

Subsequently, data reproduced from the recording medium 8 is supplied as a bit stream to and decoded by a decoder 9 of the decoding apparatus. A format change circuit 10 changes the format of the decoded data from the decoder 9 to change the data from data in units of a block to data in units of a frame. The brightness data and the colour difference data outputted from the format change circuit 10 are supplied to and stored into a pair of frame memories 11 and 12, respectively. Then, the brightness data and the colour difference data are read out from the frame memories 11 and 12 and converted from digital data into analog data by a pair of digital to analog (D/A) converters 13 and 14, respectively. They are then supplied as a brightness signal and a colour difference signal to and composed by a post-processing circuit 15 and outputted to another circuit (not shown).

The encoder 7 compresses picture data inputted thereto and supplies the thus compressed picture data to the recording medium 8, and the decoder 9 decompresses such compressed picture data and outputs the thus decompressed picture data to the format change circuit 10. By compressing data in this manner, the amount of data to be stored onto the recording medium 8 can be reduced. Line correlation or inter-frame correlation of a picture signal is utilized for such compression.

Where line correlation is utilized, a picture signal can be compressed, for example, by discrete cosine transform (DCT) or by some other processing.

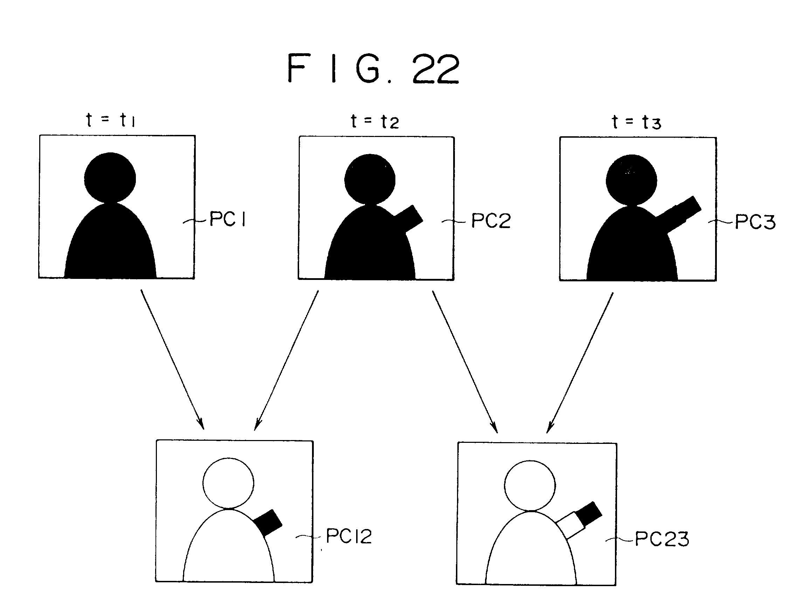

Where inter-frame correlation is utilized, a picture signal can be coded into a further compressed condition. For example, when frame pictures PC1, PC2 and PC3 are generated at times t1, t2 and t3, respectively, in Figure 22, the difference between picture signals of the frame pictures PC1 and PC2 is calculated to produce a picture PC12, and the difference between picture signals PC2 and PC3 is calculated to produce another picture PC23. Since pictures of frames near to each other in time do not present a very great difference, if the difference between them is calculated, the difference signal has a small value. Therefore, if the difference signal is coded, then the amount of codes needed can be reduced.

However, transmission of only such difference signals does not allow regeneration of the original picture. Therefore, the picture of each frame is formed as one of three types of pictures including an I-picture, a P-picture and a B-picture to compress the picture signal.

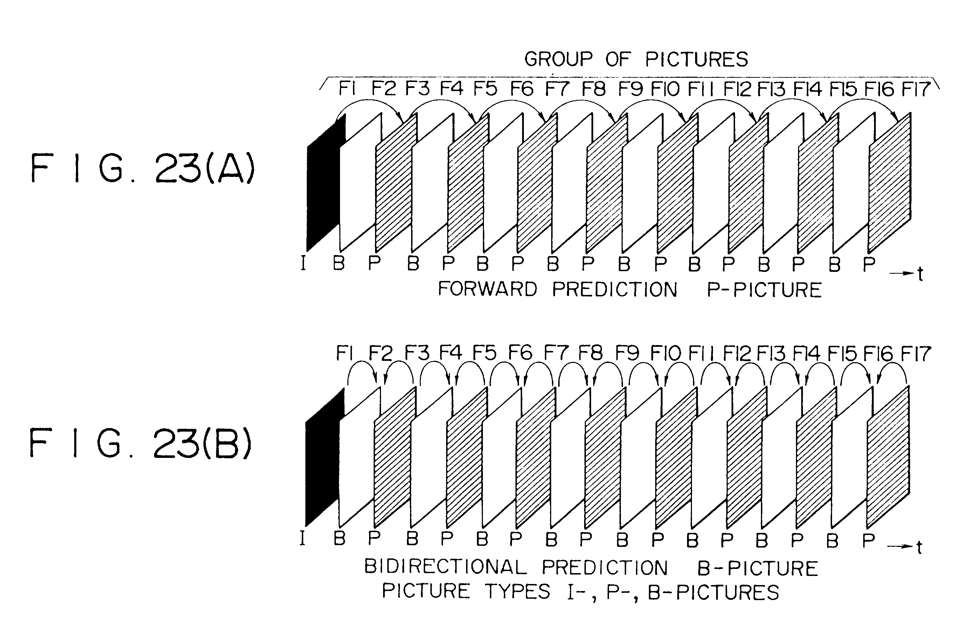

In particular, for example, referring to Figure 23(A), a picture signal of 17 frames F1 to F17 is regarded as a group of pictures and as one unit for processing. Then, the picture signal of the first frame F1 is coded as an I-picture; the second frame F2 is processed as a B-picture; and the third frame F3 is processed as a P-picture. Then, the fourth to 17th frames are processed alternately as B-pictures and P-pictures.

For the picture signal of an I-picture, the picture signal for one full frame is coded and transmitted as it is. For the picture signal of a P-picture, basically the difference from the picture signal of an I-picture or a P-picture preceding in time is coded and transmitted as seen from Figure 23(A). Further, for the picture signal of a B-picture, basically the difference from an average value between a frame preceding in time and another frame following in time is calculated as seen from Figure 23(B), and the difference is coded and transmitted.

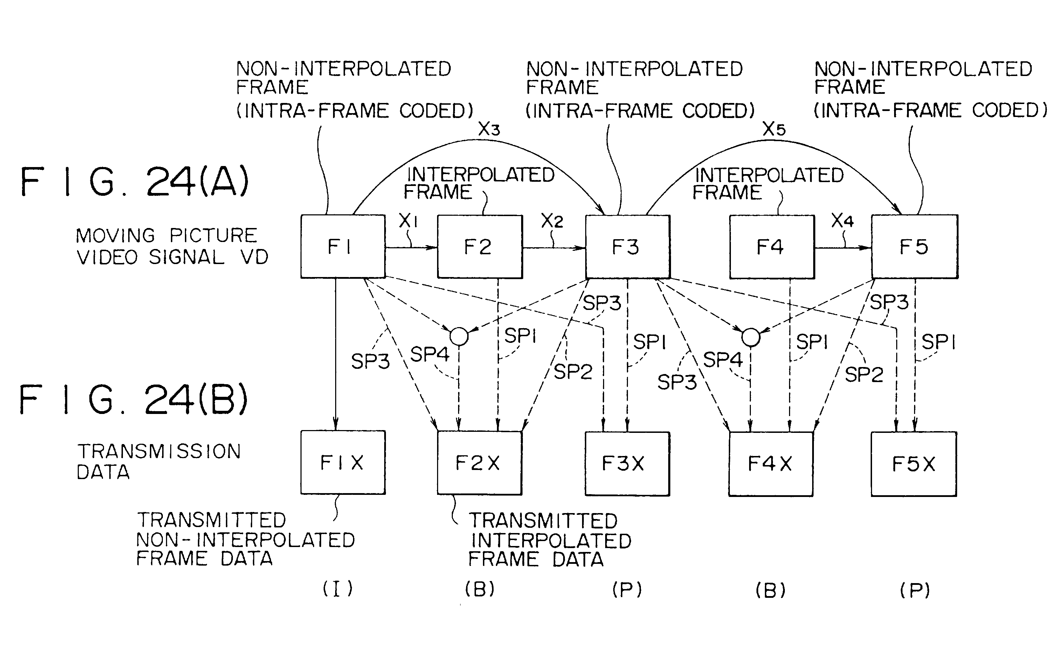

Figure 24 illustrates the principle of the method of coding a moving picture signal in this manner. As seen from Figure 24, since the first frame F1 is processed as an I-picture, it is coded as it is and transmitted as transmission data F1X into a transmission line (intra-picture coding). On the other hand, since the second frame F2 is processed as a B-picture, the difference of the second frame F2 from an average value between the frame F1 preceding in time and the frame F3 following in time is calculated, and the difference is coded and transmitted as transmission data F2X.

More particularly, the processing for a B-picture includes four kinds of processing. The first kind of processing involves coding of data of the original frame F2 as it is and transmission of the coded data as transmission data F2X (SP1) (intra-picture coding) and is processing similar to that for an I-picture. In the second kind of processing, the difference from the frame F3 following in time is calculated, and the difference (SP2) is coded and transmitted (backward predictive coding). In the third kind of processing, the difference (SP3) from the frame F1 preceding in time is coded and transmitted (forward predictive coding). Finally in the fourth kind of processing, the difference (SP4) from an average value between the frame F1 preceding in time and the frame F3 following in time is calculated, and the difference is coded and transmitted as transmission data F2X.

That one of the four methods which minimizes the amount of transmission data is adopted.

It is to be noted that, when difference data is transmitted, a motion vector x1 from the picture (predictive picture) of the frame which makes an object for calculation of the difference (a motion vector between the frames F1 and F2) (in the case of forward prediction) or x2 (a motion vector between the frames F3 and F2) (in the case of backward prediction) or both of such motion vectors x1 and x2 are transmitted together with the difference data.

Further, for the frame F3 of a P-picture, using the frame F1 preceding in time as a predictive picture, a difference signal (SP3) of the frame F3 from the frame F1 and a motion vector x3 are calculated, and they are transmitted as transmission data F3X (forward predictive coding). Or else, data of the original frame F3 is transmitted as it is as transmission data F3X (SP1) (intra-picture coding). That one of the methods which minimizes the amount of transmission data is selected similarly as in the case of a B-picture.

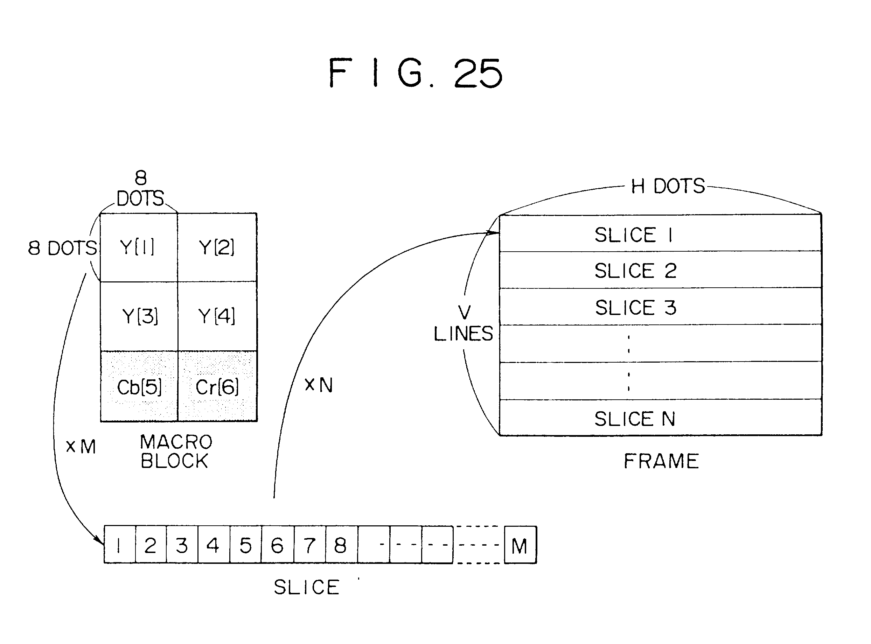

Picture data of a frame which is constituted from V lines, each constituted from H dots, is divided, for example, for each 16 lines into N slices 1 to N, each including M macro blocks as seen from Figure 25. Each macro block includes block data Y[1] to Y[4] each including brightness data for 8 x 8 picture elements (pixels), block data Cb[5] and Cr[6] which are colour difference data corresponding to all of (16 x 16) picture element data of the block data Y[1] to Y[4].

In particular, in a macro block, with regard to a brightness signal, picture element data of 16 x 16 picture elements (Y[1] to Y[4]) which successively appear in the horizontal and vertical scanning directions make a unit, but with regard to the two colour difference signals corresponding to the brightness signal, colour difference data for 16 x 16 picture elements are allocated to each (8 x 8 picture elements) of the blocks Cr[6] and Cb[5] after reduction of the amount of data and time base multiplexing make a unit for processing. Picture data are arranged in each slice such that picture data appear successively in units of a macro block, and in each macro block, picture data appear successively in units of a block (8 x 8 dots) in the order of raster scanning.

It is to be noted that the data Y[1] to Y[4], Cb[5] and Cr[6] are transmitted in this order. In other words, the numbers applied to the symbols represent the order in transmission.

By compressing (thinning out) picture data of a high resolution, for example, picture data for high definition television, to 1/2 in each of the vertical and horizontal directions, picture data of a low resolution can be obtained. If the aspect ratio of the picture data thus obtained is changed from 16:9 to 4:3, then the picture data can be displayed on a television receiver of the NTSC system.

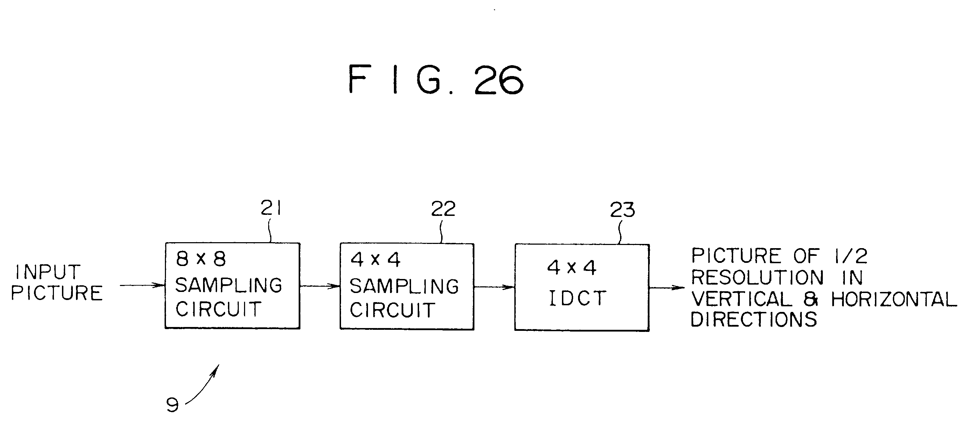

When it is tried to compress a picture of a high resolution to 1/4 (= 1/2 x 1/2) and display it in this manner, a decoder of, for example, such a construction as shown in Figure 26 is employed as the decoder 9 of Figure 21. It is to be noted that data of an input picture to the decoder 9 have been compressed by discrete cosine transform (DCT) by the encoder 7.

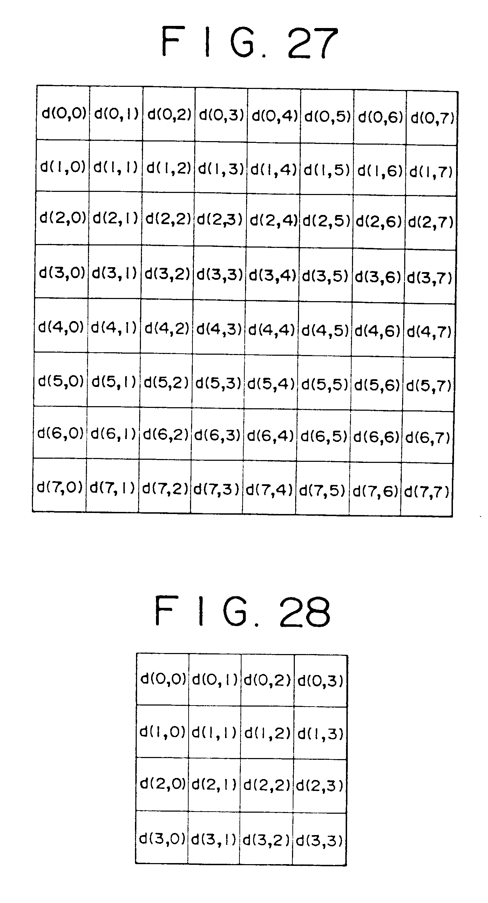

Referring to Figure 26, picture data (DCT coefficients) obtained by DCT processing in units of 8 x 8 picture elements by the encoder 7 are supplied to a sampling circuit 21 of the decoder 9, from which, for example, such data for 8 x 8 picture elements as shown in Figure 27 are sampled out. Referring to Figure 27, the 8 x 8 data are constituted from DCT coefficients, and the data correspond to higher frequency components of the picture in the vertical direction towards the bottom of Figure 27 while the data correspond to higher frequency components of the picture in the horizontal direction towards the right end of Figure 27.

Referring back to Figure 26, another sampling circuit 22 at the next stage samples out 4 x 4 DCT coefficients corresponding to lower frequency components shown in Figure 28 from the 8 x 8 DCT coefficients shown in Figure 27. The thus sampled out DCT coefficients are 4 x 4 coefficients at the left upper corner of Figure 27. The 4 x 4 DCT coefficients sampled out by the sampling circuit 22 are inputted to an inverse discrete cosine transform circuit (IDCT) 23, by which they are transformed by inverse discrete cosine transform. Consequently, picture data (4 x 4 picture element data) whose resolutions in the vertical and horizontal directions are reduced to 1/2 are obtained.

In the conventional apparatus described above, when picture data of a lower resolution are to be produced from picture data of a high resolution, only coefficients corresponding to low frequency components are sampled out. Consequently, an interlace structure included in high frequency components is lost. Therefore, the conventional apparatus has the disadvantage that the picture of the low resolution does not present smooth motion.

Further, when predictive coding is applied to such a system as described above wherein coded data for 4 x 4 picture elements are sampled out on the decoder side from coded data processed by DCT processing in units of 8 x 8 picture elements on the encoder side to obtain a picture of a lower resolution by decoding, since a predictive picture produced on the decoder side does not coincide completely with another predictive picture produced by a local decoder on the encoder side, if the predictive picture produced on the decoder side is used for decoding, then a mismatch error will be accumulated. Such a mismatch error causes loss of an interlace structure in a picture of a low resolution and causes deterioration of the picture quality of a reproduced picture.

The invention addresses the problem of providing picture signal coding and decoding methods and picture signal coding and decoding apparatus which can regenerate a picture of a low resolution which maintains an interlace structure and exhibits smooth motion.

In order to attain the object described above, according to an aspect of the present invention, there is provided a picture signal decoding method as defined in claim 1, of the type wherein, from coefficient data of a first block formed by orthogonal transformation of picture element data, those of the coefficient data of a second block having a smaller range than the first block are sampled out, and inverse orthogonal transformation is performed for the coefficient data of the second block, wherein the inverse orthogonal transformation is performed for data obtained by replacing at least one of the coefficient data in the second block by a corresponding one or ones of the coefficient data in the first block but outside the second block.

PCT Published Patent Application WO-A-92/06563 and Signal Processing of HDTV, 4 September 1991, Turin IT, pages 353-360, XPOO0379972; Dufour et al: "A HDTV compatible coding scheme for distribution purposes " disclose systems in which transformed coefficient data of a high definition signal is subsampled to produce a block of coefficient data corresponding to a standard signal that can then be decoded and displayed on a standard television.

According to another aspect of the present invention, there is provided a picture signal decoding method for decoding a signal of the type obtained by a coding method as defined below, comprising the steps of:
sampling out the low order coefficient data of a first block (d0,0 to 7,7) formed by orthogonal transformation of picture element data to form the coefficient data of a second block (d0,0 to d3,3), the second block containing fewer coefficient data items than the first block; characterised by
replacing at least one of the coefficient data (d3,0 to d3,3) in the second block by a replacement value dependent upon a corresponding one or ones of the coefficient data (d7,0 to d7,3) in the first block but outside the second block; and
performing inverse orthogonal transformation for the coefficient data of the second block.

According to a further aspect of the present invention, there is provided a picture signal coding apparatus, comprising:
orthogonal transformation means for transforming picture element data of a frame formed from two fields and having an interlace structure by orthogonal transformation to form m x n coefficient data;
quantization means for quantizing the coefficient data and outputting quantization data obtained by the quantization; and
variable length coding means for coding the quantization data into variable length codes; characterised in that
the variable length coding means successively transmits the quantization data in the order of those coefficient data of a first quantization data group which correspond to j x k ones of the m x n coefficient data, j being smaller than m and k being smaller than n, those coefficient data of a second quantization data group which correspond to those of the m x n coefficient data which belong to the m-N+1th to mth rows in the first to kth columns, N being 1, 2, 3 ..., j-1, and those coefficient data of a third quantization data group which correspond to those of the m x n coefficient data which do not belong to any of the first and second quantization data groups.

According to a still further aspect of the present invention, there is provided a picture signal decoding apparatus for decoding transmission picture element data of a frame formed from two fields and having an interlace structure, the transmission picture element data being of the type obtained by using a coding method as defined below, the decoding apparatus comprising:
variable length decoding means (71) for decoding the transmission data by variable length decoding to obtain decoded data and outputting the decoded data; and
dequantization means (72 81) for dequantizing the decoded data to obtain coefficient data and outputting the coefficient data;
sampling out means (82) for sampling out, from the coefficient data, j x k coefficient data obtained by replacing successive ones of the coefficient data of the jth row by replacement values dependent upon the successive coefficient of the mth row in the corresponding columns, j being smaller than m, k being smaller than n; and
inverse orthogonal transformation means (83) for transforming the j x k coefficient data sampled out by said sampling out means by inverse orthogonal transformation.

According to a still further aspect of the present invention there is provided a picture signal coding method, comprising the steps of:
transforming picture element data of a frame formed from two fields and having an interlace structure by orthogonal transformation to form m x n coefficient data;
quantizing the coefficient data and outputting quantization data obtained by the quantization; and
coding the quantization data into variable length codes; characterised in that
the coding is in the order of those coefficient data of a first quantization data group which correspond to j x k ones of the m x n coefficient data, j being smaller than m, k being smaller than n, those coefficient data of a second quantization data group which correspond to those of the m x n coefficient data which belong to the m-N+1th to mth rows in the first to kth columns, N being 1, 2, 3 ..., j-1, and those coefficient data of a third quantization data group which correspond to those of the m x n coefficient data which do not belong to any of the first and second quantization data groups.

In the picture signal coding and decoding methods and apparatus, picture data are processed by DCT processing into m x n coefficient data. Of the m x n coefficient data, j x k coefficient data are transmitted. Of the j x k coefficient data, the coefficient data of the jth row are added to the coefficient data of the mth row and then transmitted. Or else, the coefficient data of the jth row are replaced by the coefficient data of the mth row and then transmitted.

Consequently, those of the coefficient data which correspond to a low frequency region are transmitted. Then, predetermined ones of the transmission data are processed so that they include coefficient data of a higher frequency region. Accordingly, such a situation that smooth motion of the picture is disturbed by the loss of an interlace structure is eliminated or reduced.

Embodiments of the invention will now be described, by way of example only, with reference to the accompanying drawings in which:
Figure 1 is a block diagram of a picture signal coding apparatus;
Figures 2(A) and 2(B) are diagrammatic views illustrating operation of a predictive mode change-over circuit of the picture signal coding apparatus of Figure 1;
Figures 3(A) and 3(B) are diagrammatic views illustrating operation of a DCT mode change-over circuit of the picture signal coding apparatus of Figure 1;
Figure 4 is a table illustrating operation of an address control circuit shown in Figure 7;
Figure 5 is table showing the order in which data illustrated in Figure 4 are scanned by zigzag scanning;
Figure 6 is a block diagram of a picture signal decoding apparatus;
Figure 7 is a block diagram showing a selection circuit of the picture signal decoding apparatus of Figure 6;
Figures 8 to 11 are diagrammatic views illustrating different manners of motion compensation operation of a motion compensation circuit of the picture signal decoding apparatus of Figure 6 in a frame predictive mode (1), a field predictive mode, another frame predictive mode (2) and a further frame predictive mode (3), respectively;
Figure 12 is a table showing data sampled out from a left upper corner area of the table of Figure 4;
Figure 13 is a table illustrating data when data in the fourth row and data in the eighth row in Figure 4 are added to obtain data in the fourth row in Figure 12;
Figure 14 is a table illustrating data when the data in the fourth row in Figure 4 are replaced by the data in the eighth row;
Figure 15 is a table illustrating data when data in the third row and the data in the fourth row in Figure 4 are replaced by data in the seventh row and the data in the eighth row, respectively;
Figure 16 is a table illustrating the order of zigzag scanning when data obtained by the processing illustrated in Figure 15 are to be transmitted;
Figure 17 is a syntax diagram illustrating transmission of data when the zigzag scanning illustrated in Figure 16 is performed;
Figure 18 is a block diagram of another picture signal coding apparatus;
Figure 19 is a block diagram of another picture signal decoding apparatus;
Figure 20 is a block diagram showing a selection circuit of the picture signal coding apparatus of Figure 19;
Figure 21 is a block diagram showing a conventional picture signal coding apparatus and a conventional picture signal decoding apparatus;
Figure 22 is a diagrammatic view illustrating compression of data;
Figures 23(A) and 23(B) are diagrammatic views showing different picture types when picture data are compressed;
Figure 24 is a diagrammatic view illustrating the principle in coding a moving picture signal;
Figure 25 is a diagrammatic view showing a transmission format;
Figure 26 is a block diagram of a decoder of the picture signal decoding apparatus shown in Figure 9;
Figure 27 is a table illustrating data sampled out by a sampling circuit of the decoder shown in Figure 26; and
Figure 28 is a table illustrating data sampled out by another sampling circuit of the decoder shown in Figure 26.

A picture signal coding apparatus and a picture signal decoding apparatus according to one embodiment of the present invention have basically similar constructions to the conventional picture signal coding and decoding apparatus, respectively, described hereinabove with reference to Figure 21, but are different in that the encoder 7 and the decoder 9 have different constructions to those of the conventional picture signal coding and decoding apparatus. Therefore, detailed description will be given below only of the encoder and the decoder of the picture signal coding and decoding apparatus while overlapping description of common components of the picture signal coding and decoding apparatus to those of the conventional picture signal coding and decoding apparatus is omitted herein to avoid redundancy.

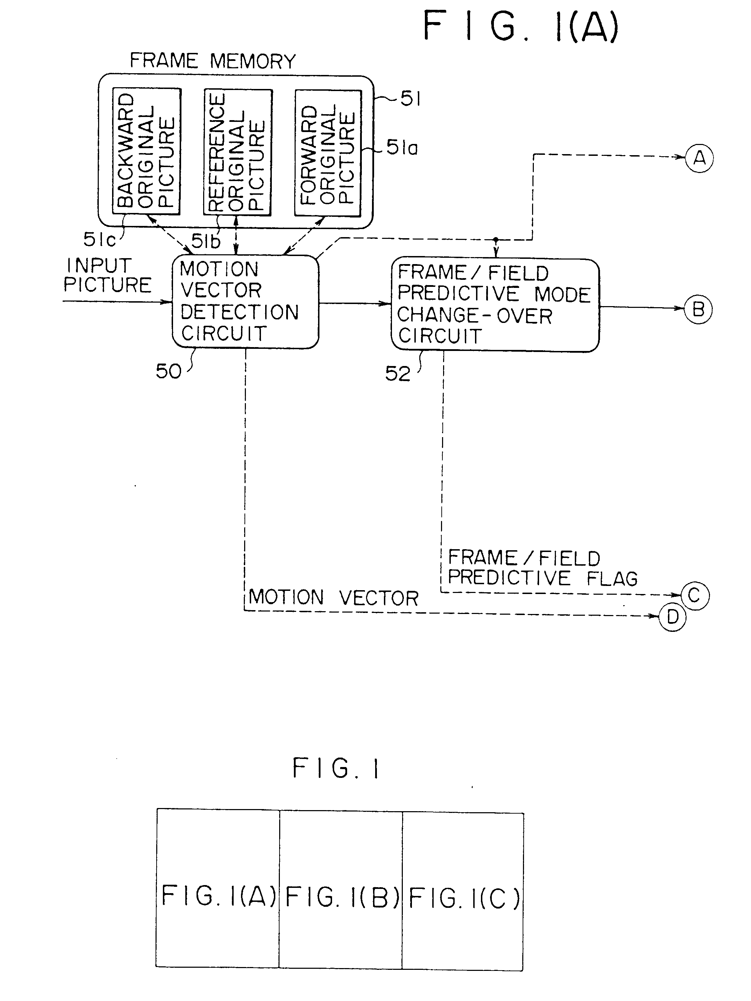

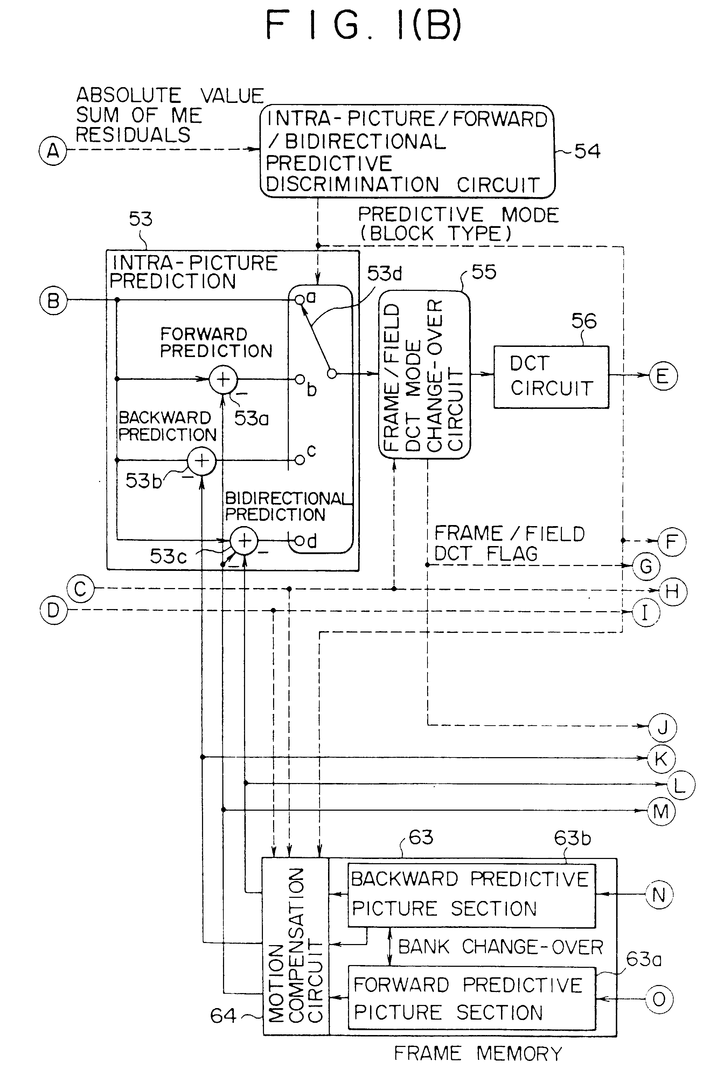

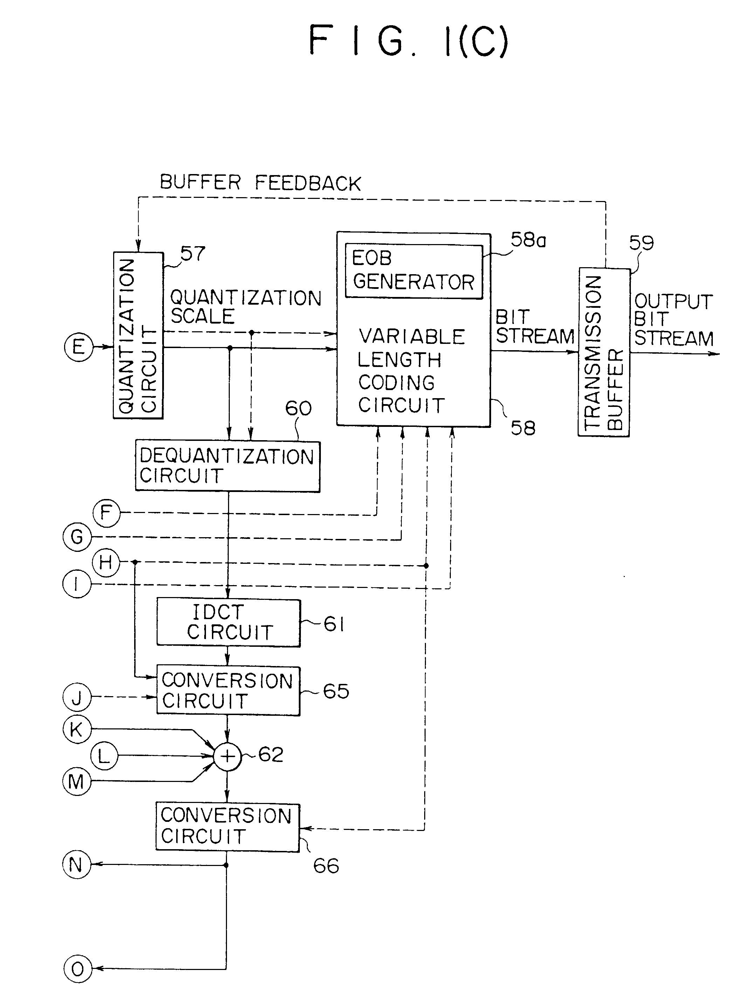

Referring first to Figure 1, there is shown a form of encoder. Picture data to be coded are inputted in units of a macro block to a motion vector detection circuit 50. The motion vector detection circuit 50 processes picture data of each frame as an I-picture, a P-picture or a B-picture in accordance with a preset predetermined sequence. As which ones of I-, P- and B-pictures pictures of frames sequentially inputted to the motion vector detection circuit 50 are to be processed is determined in advance. For example, as shown in Figure 23, the pictures of a group of pictures constituted from frames F1 to F17 are processed as I-, B-, P-, B-, P-, ..., B- and P-pictures, respectively.

Picture data of a frame to be processed as an I-picture such as, for example, the frame F1, are transferred from the motion vector detection circuit 50 to and stored in a forward original picture section 51a of a frame memory 51; picture data of a frame to be processed as a B-picture such as, for example, the frame F2, are transferred to and stored into a reference original picture section 51b; and picture data of a frame to be processed as a P-picture such as, for example, the frame F3, are transferred to and stored into a backward original picture section 51c.

Further, when a picture of a frame to be processed as a B-picture (frame F4) or a P-picture (frame F5) is inputted at a next timing, the picture data of the first P-picture (frame F3) stored in the backward original picture section 51c until then are transferred to the forward original picture section 51a while the picture data of the next B-picture (frame F4) are stored (overwritten) into the reference original picture section 51b and the picture data of the next P-picture (frame F5) are stored (overwritten) into the backward original picture section 51c. Such a sequence of operations as described above is repeated successively.

A signal of a picture stored in the frame memory 51 is read out from the frame memory 51 and then processed by frame predictive mode processing or field predictive mode processing by a predictive mode change-over circuit 52. Further, under the control of a predictive discrimination circuit 54, calculation for intra-picture prediction, forward prediction, backward prediction or bidirectional prediction is performed by a calculation section or prediction circuit 53. Which one of the types of processing should be performed is determined based on a predictive error signal, that is, a difference between a reference original picture for an object of processing and a predictive picture for the reference original picture. Therefore, the motion vector detection circuit 50 generates an absolute value sum or a square sum of predictive error signals which is used for such discrimination.

Here, a frame predictive mode and a field predictive mode of the predictive mode change-over circuit 52 will be described.

When the frame predictive mode is set, the predictive mode change-over circuit 52 outputs four brightness blocks Y[1] to Y[4] supplied from the motion vector detection circuit 50 as they are to the calculation section 53 at the succeeding stage. In particular, in this instance, data of lines of odd-numbered fields and data of lines of even-numbered lines are present in a mixed condition in each brightness block. In the frame predictive mode, prediction is performed in units of four brightness blocks (macro blocks), and one motion vector corresponds to four brightness blocks.

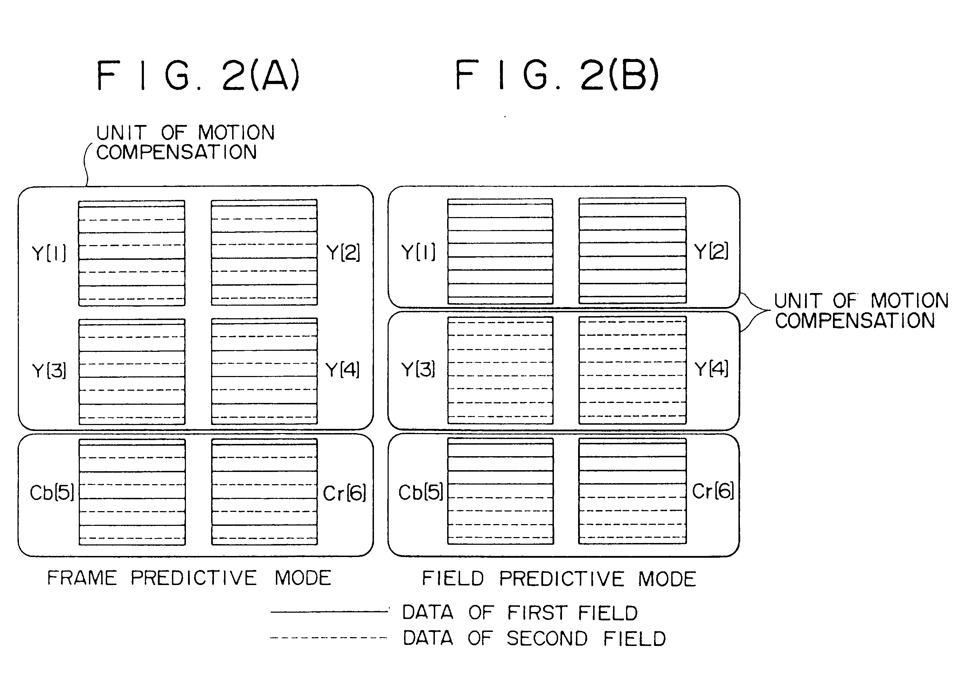

On the other hand, in the field predictive mode, the predictive mode change-over circuit 52 processes a signal, which is inputted thereto from the motion vector detection circuit 50 and has such a construction as illustrated in Figure 2(A), so that, for example, the brightness blocks Y[1] and Y[2] of the four brightness blocks are constituted from dots of lines of odd-numbered fields while the other two brightness blocks Y[3] and Y[4] are constituted from data of lines of even-numbered fields as seen from Figure 2(B). The predictive mode change-over circuit 52 outputs the resulted data to the calculation section 53. In this instance, one motion vector (a motion vector of the odd-numbered fields) corresponds to the two brightness blocks Y[1] and Y[2], and another one motion vector (a motion vector of the even-numbered fields) corresponds to the other two brightness blocks Y[3] and Y[4].

The motion vector detection circuit 50 outputs an absolute value sum of predictive errors in the frame predictive mode and another absolute value sum of predictive errors in the field predictive mode to the predictive mode change-over circuit 52. The predictive mode change-over circuit 52 compares the absolute value sums of predictive errors in the frame predictive mode and the field predictive mode, performs processing of the absolute value sums corresponding to that one of the predictive modes in which the absolute value sum presents a lower value, and outputs the resulted data to the calculation section 53.

Alternatively, such processing as described above may be performed by the motion vector detection circuit 50. In particular, the motion vector detection circuit 50 can output a signal corresponding to a determined mode to the predictive mode change-over circuit 52, and the predictive mode change-over circuit 52 outputs the signal as it is to the calculation section 53 at the succeeding stage.

It is to be noted that, in the frame predictive mode, a colour difference signal is supplied to the calculation section 53 in a condition wherein data of lines of odd-numbered fields and data of lines of even-numbered fields are present in a mixed condition as seen from Figure 2(A). On the other hand, in the field predictive mode, upper halves (4 lines) of the colour difference blocks Cb[5] and Cr[6] are colour difference signals of odd-numbered fields corresponding to the brightness blocks Y[1] and Y[2] while the lower halves (four lines) are colour difference signals of even-numbered fields corresponding to the brightness blocks Y[3] and Y[4] as seen from Figure 2(B).

The motion vector detection circuit 50 produces an absolute value sum of predictive errors, which is to be used to determine which one of intra-picture prediction, forward prediction, backward prediction and bidirectional prediction should be performed by the predictive discrimination circuit 54, in the following manner.

In particular, the motion vector detection circuit 50 calculates, as an absolute value sum of predictive errors for intra-picture prediction, a difference between an absolute value ¦ΣAij¦ of a sum ΣAij of signals Aij of a macro block of a reference original picture and a sum Σ¦Aij¦ of absolute values ¦Aij¦ of the signals Aij of the macro block. Further, the motion vector detection circuit 50 calculates, as an absolute value sum of predictive errors for forward prediction, a sum Σ¦Aij - Bij¦ of absolute values ¦Aij - Bij¦ of differences Aij - Bij between signals Aij of a macro block of a reference original picture and signals Bij of another macro block of a predictive picture. Further, the motion vector detection circuit 50 calculates absolute value sums for backward prediction and bidirectional prediction in a similar manner as for forward prediction (changing the predictive picture to another predictive picture different from that in forward prediction).

The absolute value sums thus calculated are supplied to the predictive discrimination circuit 54. The predictive discrimination circuit 54 selects, as an absolute value sum of predictive errors for inter-frame prediction, that one of the absolute value sums of predictive errors for inter-frame predictions (forward prediction, backward prediction and bidirectional prediction) which has a smallest value. Further, the predictive discrimination circuit 54 compares the absolute value sum of predictive errors for the inter prediction and the absolute value sum of predictive errors for intra-picture prediction, selects that one of the absolute value sums which has a lower value, and sets a mode corresponding to the selected absolute value sum as a predictive mode. In particular, if the absolute value sum of predictive errors for intra-picture prediction is lower, the intra-picture predictive mode is set. Conversely, if the absolute value sum of predictive errors for inter-frame prediction is lower, a mode corresponding to that one of the absolute value sums in the forward predictive mode, the backward predictive mode and the bidirectional predictive mode which has a lowest value is set.

In this manner, the motion vector detection circuit 50 supplies a signal for a macro block of a reference original picture corresponding to one of the frame predictive mode and the field predictive mode selected by the predictive mode change-over circuit 52 to the calculation section 53 by way of the predictive mode change-over circuit 52, and detects a motion vector between a predictive picture corresponding to one of the four predictive modes selected by the predictive discrimination circuit 54 and a reference original picture and outputs the detected motion vector to a variable length coding circuit 58 and a motion compensation circuit 64. As described above, the motion vector is selected so that the corresponding absolute value sum of predictive errors may be in the minimum.

The predictive discrimination circuit 54 sets an intra-frame (intra-picture) predictive mode (in which no motion compensation is performed) as the predictive mode and changes over a switch 53d of the calculation section 53 to a contact a side when the motion vector detection circuit 50 is reading out picture data of an I-picture from the forward original picture section 51a. Consequently, the picture data of an I-picture are inputted to a DCT mode change-over circuit 55.

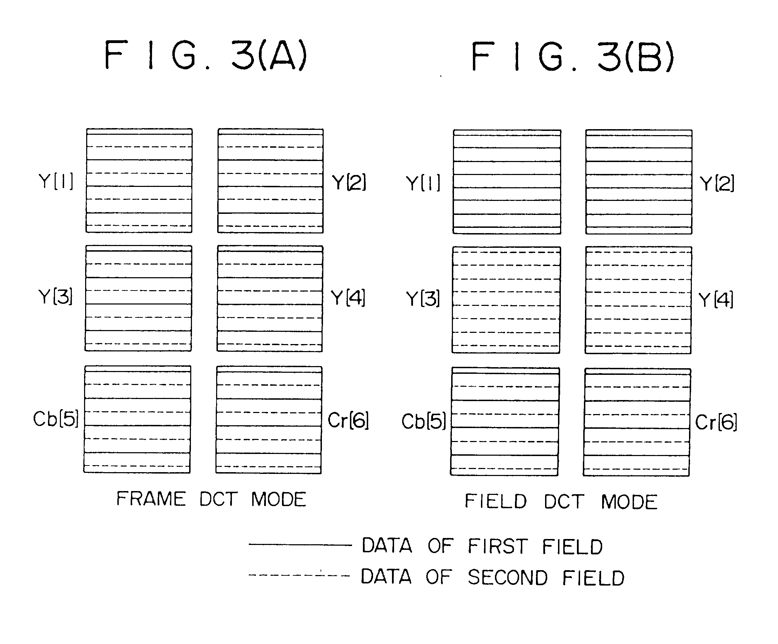

The DCT mode change-over circuit 55 puts data of four brightness blocks into a condition in which lines of odd-numbered fields and lines of even-numbered fields are present in a mixed condition (frame DCT mode) or another condition in which lines of odd-numbered fields and lines of even-numbered fields are present in a separate condition (field DCT mode) as shown in Figure 3(A) or 3(B), and outputs the resulted data to a DCT circuit 56.

In particular, the DCT mode change-over circuit 55 compares a coding efficiency when data of odd-numbered fields and even-numbered fields are present in a mixed condition and are processed by DCT processing and another coding efficiency when such data are present separately and are processed by DCT processing, and selects a mode in which the coding efficiency is higher.

For example, the DCT mode change-over circuit 55 changes input signals to signals of a construction wherein lines of odd-numbered fields and even-numbered fields are present in a mixed condition as seen in Figure 3(A), calculates differences between the signals of lines of the odd-numbered fields and the signals of lines of the even-numbered fields which are adjacent to each other in the vertical direction, and calculates a sum of absolute values (or a square sum) of the differences. Or, the DCT mode change-over circuit 55 changes input signals to signals of another construction wherein lines of odd-numbered fields and lines of even-numbered fields are separate from each other as shown in Figure 3(B), calculates differences between the signals of lines of the odd-numbered fields which are adjacent to each other in the vertical direction and the signals of lines of the even-numbered fields which are adjacent to each other in the vertical direction, and calculates two sums of absolute values (or square sums) of the differences. Further, the DCT mode change-over circuit 55 compares the two sums (absolute value sums) with each other and sets a DCT mode corresponding to that of the sums which has a lower value. In particular, if the former is lower, then the frame DCT mode is set, but if the latter is lower, then the field DCT mode is set.

When the predictive mode change-over circuit 52 sets the frame predictive mode (Figure 2(A)) and the DCT mode change-over circuit 55 sets the frame DCT mode (Figure 3(A)) and when the predictive mode change-over circuit 52 sets the field predictive mode (Figure 2(B)) and the DCT mode change-over circuit 55 sets the field DCT mode (Figure 3(B)), the DCT mode change-over circuit 55 need not change the array of data.

In contrast, when the predictive mode change-over circuit 52 sets the field predictive mode (Figure 2(B)) and the DCT mode change-over circuit 55 sets the frame DCT mode (Figure 3(A)) and when the predictive mode change-over circuit 52 sets the frame predictive mode (Figure 2(A)) and the DCT mode change-over circuit 55 sets the field DCT mode (Figure 3(B)), the DCT mode change-over circuit 55 performs re-arrangement of data. In order to allow the processing to be realized, a predictive flag is supplied from the predictive mode change-over circuit 52 to the DCT mode change-over circuit 55.

The DCT mode change-over circuit 55 outputs data of a construction corresponding to a selected DCT mode to the DCT circuit 56 and outputs a DCT flag indicative of the selected DCT mode to the variable length coding circuit 58 and a conversion circuit 65.

As apparent from comparison between the predictive mode (Figures 2(A) and 2(B)) of the predictive mode change-over circuit 52 and the DCT mode (Figures 3(A) and 3(B)) of the DCT mode change-over circuit 55, data structures of a brightness block in the different modes are substantially the same as each other.

When the predictive mode change-over circuit 52 selects the frame predictive mode (in which odd-numbered lines and even-numbered lines are present in a mixed condition), the possibility that the DCT mode change-over circuit 55 may select the frame DCT mode (in which odd-numbered lines and even-numbered lines are present in a mixed condition) is high, but when the predictive mode change-over circuit 52 selects the field predictive mode (in which data of odd-numbered fields and data of even-numbered fields are separate from each other), the possibility that the DCT mode change-over circuit 55 may select the field DCT mode (in which data of odd-numbered fields and data of even-number fields are separate from each other) is high.

However, this is not always the case, and the predictive mode change-over circuit 52 decides a mode so that the absolute value sum of predictive errors may be minimized while the DCT mode change-over circuit 55 decides a mode so that a highest coding efficiency may be achieved.

Picture data of an I-picture outputted from the DCT mode change-over circuit 55 are inputted to the DCT circuit 56, processed by DCT (discrete cosine transform) processing and converted into DCT coefficients. The DCT coefficients are inputted to a quantization circuit 57, by which they are quantized with a quantization step corresponding to the amount of data (buffer accumulated amount) accumulated in a transmission buffer memory 59. The thus quantized data are inputted to the variable length coding circuit 58.

The variable length coding circuit 58 converts picture data (in the present case, data of an I-picture) supplied thereto from the quantization circuit 57 into a variable length code such as, for example, a Huffman code in accordance with a quantization step (scale) supplied thereto from the quantization circuit 57, and outputs the thus obtained variable length code to a transmission buffer memory 59.

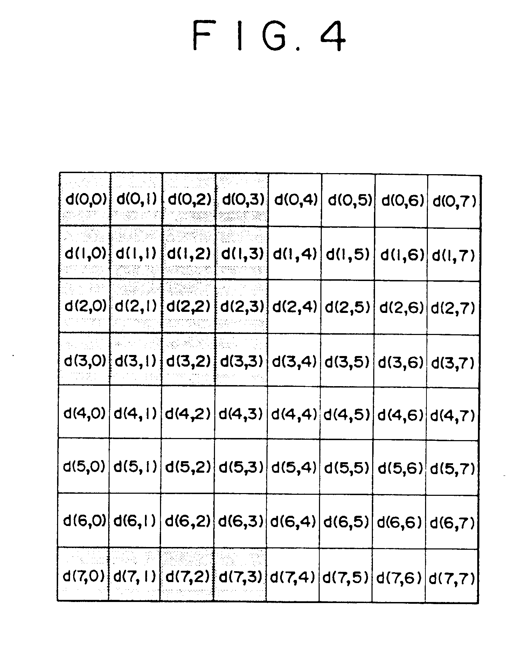

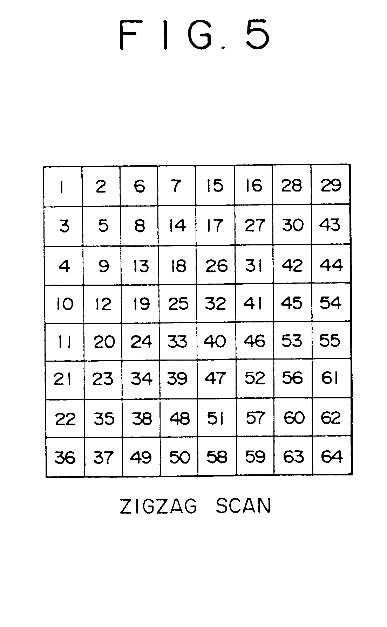

The quantized DCT coefficients are outputted, from the characteristic of the DCT, such that coefficients of a low frequency region (high in power) are outputted to a left upper corner are (for example, those of 8 x 8 DCT coefficients shown at a left upper corner in Figure 4). Generally, a coefficient is coded into a variable length code in a combination of a run length of Os (zero run) and a coefficient (level). The system by which a coefficient is coded in a combination of a zero run and a level is called run length coding. When a code is coded by run length coding, a long zero run can be produced by performing transmission of coefficients in such an order called zigzag scanning as illustrated in Figure 5 (in Figure 5, the numerals indicate numbers in the order of transmission), and consequently, data can be compressed.

The variable length coding circuit 58 receives a quantization step (scale) from the quantization circuit 57, a predictive mode (set from among the intra-picture predictive mode, the forward predictive mode, the rearward predictive mode and the bidirectional predictive mode) (block type) from the predictive discrimination circuit 54, a motion vector from the motion vector detection circuit 50, a predictive flag (a flag indicating which one of the frame predictive mode and the field predictive mode is set) from the predictive mode change-over circuit 52 and a DCT flag (a flag indicating which one of the frame DCT mode or the field DCT mode is set) outputted from the DCT mode change-over circuit 55. Also the data thus received are converted into variable length codes together with zigzag scanned quantization data.

The transmission buffer memory 59 stores data transmitted thereto once and then outputs the data as a bit stream at a predetermined timing. Further, the transmission buffer memory 59 feeds back a quantized control signal in units of a macro block to the quantization circuit 57 in response to an amount of data remaining therein to control the quantization scale. Consequently, the transmission buffer memory 59 adjusts the amount of data generated as a bit stream to keep the data in the inside thereof to an appropriate remaining amount (at which no overflow or underflow takes place).

For example, if the remaining amount of data of the transmission buffer memory 59 is increased to an allowable upper limit value, then the transmission buffer memory 59 increases the quantization scale of the quantization circuit 57 by means of a quantization control signal to reduce the amount of quantization data. Or on the contrary if the amount of remaining data of the transmission buffer memory 59 decreases to an allowable lower limit, the transmission buffer 59 decreases the quantization scale of the quantization circuit 57 by way of a quantization control signal to increase the amount of quantization data.

A bit stream outputted from the transmission buffer memory 59 is multiplexed with a coded audio signal, a code synchronizing signal and so forth, and further, a code for error correction is added to the multiplexed signal, whereafter predetermined modulation is applied to the resulted signal. Then, the modulated signal is recorded as convex and concave bits onto a master disk by laser light. A stamper is formed making use of the master disk, and a large amount of copy disks (for example, optical disks) are formed from the stamper.

Meanwhile, data of an I-picture outputted from the quantization circuit 57 are inputted to a dequantization circuit 60, in which they are dequantized to a representative value in accordance with a quantization step supplied thereto from the quantization circuit 57. The output of the dequantization circuit 60 is inputted to and processed by inverse DCT processing by an IDCT (inverse DCT) circuit 61, and then inputted to a conversion circuit 65. The conversion circuit 65 returns the data inputted thereto from the IDCT circuit 61 into the condition of the frame predictive mode (Figure 2(A)) or into the condition of the field predictive mode (Figure 2(B)) in accordance with a DCT flag supplied thereto from the DCT mode change-over circuit 55 and a predictive flag outputted from the predictive mode change-over circuit 52 so that they may coincide with the condition of predictive picture data outputted from the motion compensation circuit 64, and outputs the resulted data to an arithmetic unit 62. The data outputted from the arithmetic unit 62 are inputted to a conversion circuit 66, by which they are returned into those of the condition in the frame predictive mode (the condition shown in Figure 2(A)) in response to a predictive flag. The resulted data is supplied to and stored into a forward predictive picture section 63a of the frame memory 63.

It is to be noted that the frame memory 63 can be substituted by a field memory, and in this instance, since data are stored individually for each field, data outputted from the arithmetic unit 62 are returned into those of the condition in the field predictive mode (the condition of Figure 2(B)) by the conversion circuit 66.

The motion vector detection circuit 50 first processes, when it is to process picture data of frames inputted sequentially thereto as, for example, I-, B-, P-, B-, P-, B-, ... pictures, the picture data of a frame inputted first as an I-picture and then processes, before another picture inputted subsequently is to be processed as a B-picture, picture data of a further picture inputted subsequently to the second picture as a P-picture. This is because a B-picture involves backward prediction and accordingly cannot be decoded unless a P-picture as a backward predictive picture is prepared beforehand.

Therefore, the motion vector detection circuit 50 starts, after processing of the I-picture, processing of picture data of a P-picture stored in the backward original picture section 51c. Then, similarly as in the case described above, an absolute value sum of inter-frame differences (predictive errors) in units of a macro block is supplied from the motion vector detection circuit 50 to the predictive mode change-over circuit 52 and the predictive discrimination circuit 54. The predictive mode change-over circuit 52 and the predictive discrimination circuit 54 set, in accordance with the absolute valve sum of predictive errors of the macro block of the P-picture, the frame or field predictive mode or the intra-picture predictive, forward predictive, backward predictive or bidirectional predictive mode (block type), respectively.

The calculation section 53 changes over the switch 53d to the contact a side as described above when the intra-frame predictive mode is set. Accordingly, the data are transmitted to the transmission line by way of the DCT mode change-over circuit 55, the DCT circuit 56, the quantization circuit 57, the variable length coding circuit 58 and the transmission buffer memory 59 similarly as the data of the I-picture. Further, the data are supplied to and stored into the backward predictive picture section 63b of the frame memory 63 by way of the dequantization circuit 60, the IDCT circuit 61, the conversion circuit 65, the arithmetic unit 62 and the conversion circuit 66.

In the forward predictive mode, the switch 53d is changed over to the contact b and picture data stored in the forward predictive picture section 63a of the frame memory 63 (in the present case, data of the I-picture) are read out and undergo motion compensation by the motion compensation circuit 64 in accordance with a motion vector outputted from the motion vector detection circuit 50. In particular, when setting of the forward predictive mode is instructed by the predictive discrimination circuit 54, the motion compensation circuit 64 displaces the read address of the forward predictive picture section 63a by an amount corresponding to the motion vector from a position corresponding to the position of the macro block being outputted at present from the motion vector detection circuit 50, reads out data from the displaced address and produces predictive picture data. Further, in this instance, the motion compensation circuit 64 arrays the predictive picture data into those of the condition shown in Figure 2(A) or 2(B) in response to a frame/field predictive flag supplied thereto from the predictive mode change-over circuit 52.

The predictive picture data outputted from the motion compensation circuit 64 are supplied to an arithmetic unit 53a. The arithmetic unit 53a subtracts the predictive picture data supplied thereto from the motion compensation circuit 64 and corresponding to a macro block of a reference original picture from data of the macro block supplied thereto from the predictive mode change-over circuit 52, and outputs the difference (predictive error) between them. The difference data is transmitted into the transmission line by way of the DCT mode change-over circuit 55, the DCT circuit 56, the quantization circuit 57, the variable length coding circuit 58 and the transmission buffer memory 59. Further, the difference data is locally decoded by the dequantization circuit 60, the IDCT circuit 61 and the conversion circuit 65 and then inputted to the arithmetic unit 62.

Data same as the predictive picture data supplied to the arithmetic unit 53a is also supplied to the arithmetic unit 62. The arithmetic unit 62 adds the predictive picture data outputted from the motion compensation circuit 62 to the difference data outputted from the conversion circuit 65. Consequently, picture data of an original (decoded) P-picture are obtained. However, since the data have undergone arraying processing as shown in Figure 2(A) or 2(B) by the predictive mode change-over circuit 52, processing for returning the array into that of the condition in the frame predictive mode (the condition shown in Figure 2(A)) (where the frame memory 63 is constituted otherwise from a field memory, the condition in the field predictive mode (the condition shown in Figure 2(B)) is performed in response to a predictive flag by the conversion circuit 66. The picture data of the P-picture are supplied to and stored into the backward predictive picture section 63b of the frame memory 63.

The motion vector detection circuit 50 executes processing of a B-picture after the data of the I-picture and the P-picture have been stored into the forward predictive picture section 63a and the backward predictive picture section 63b, respectively. In response to the magnitude of the absolute value sum of inter-frame differences in units of a macro block, the predictive mode change-over circuit 52 sets the frame or field predictive mode and the predictive discrimination circuit 54 sets the intra-frame/forward/backward/bidirectional predictive mode (block type) to one of the intra-frame predictive mode, the forward predictive mode, the backward predictive mode and the bidirectional predictive mode.

As described above, when in the intra-frame predictive mode or the forward predictive mode, the switch 53d is changed over to the contact a or b. In this instance, processing similar to that for the P-picture is performed, and resulted data are transmitted.

In contrast, when the backward predictive mode or the bidirectional predictive mode is set, the switch 53d is changed over to the contact c or d.

When in the forward predictive mode in which the switch 53d is changed over to the contact c, data of a picture stored in the backward predictive picture section 63b (in the present case, the picture data of a P-picture) are read out and undergo motion compensation by the motion compensation circuit 64 in accordance with a motion vector outputted from the motion vector detection circuit 50. In particular, when setting of the backward predictive mode is instructed from the predictive discrimination circuit 54, the motion compensation circuit 64 displaces the read address of the backward predictive picture section 63b by an amount corresponding to the motion vector from a position corresponding to the position of a macro block being outputted at preset from the motion vector detection circuit 50, reads out data from the thus displaced address, and produces predictive picture data. Further, the motion compensation circuit 64 arrays the data in such a manner as illustrated in Figure 2(A) or 2(B) in response to a predictive flag outputted from the predictive mode change-over circuit 52.

The predictive picture data outputted from the motion compensation circuit 64 are supplied to the arithmetic unit 53b. The arithmetic unit 53b subtracts the predictive picture data supplied thereto from the motion compensation circuit 64 from data of a macro block of a reference original picture supplied thereto from the predictive mode change-over circuit 52, and outputs the differences between them. The difference data are transmitted into the transmission line by way of the DCT mode change-over circuit 55, the DCT circuit 56, the quantization circuit 57, the variable length coding circuit 58 and the transmission buffer memory 59.

When the bidirectional predictive mode wherein the switch 53d is changed over to the contact d is set, data of a picture stored in the forward predictive picture section 63a (in the present case, the picture of an I-picture) and data of another picture stored in the backward predictive picture section 63b (in the present case, the picture of a P-picture) are read out and undergo motion compensation by the motion compensation circuit 64 in response to a motion vector outputted from the motion vector detection circuit 50. In particular, when setting of the bidirectional predictive mode is instructed from the predictive discrimination circuit 54, the motion compensation circuit 50 displaces the read addresses of the forward predictive picture section 63a and the backward predictive picture section 63b by amounts corresponding to motion vectors for a forward predictive picture and a backward predictive picture from positions corresponding to the positions of a macro block being outputted at present from the motion vector detection circuit 50, reads out data from the thus displaced addresses, and produces predictive picture data. Further, the data are arranged in response to a predictive flag from the predictive mode change-over circuit 52.

The predictive picture data outputted from the motion compensation circuit 64 are supplied to an arithmetic unit 53c. The arithmetic unit 53c subtracts an average value of the predictive picture data supplied thereto from the motion compensation circuit 64 from data of a macro block of a reference original picture supplied thereto from the motion vector detection circuit 50, and outputs the difference between them. The difference data is transmitted into the transmission line by way of the DCT mode change-over circuit 55, the DCT circuit 56, the quantization circuit 57, the variable length coding circuit 58 and the transmission buffer memory 59.

Any picture data of a P-picture is not stored into the frame memory 63 because it is not used as a predictive picture for any other picture.

It is to be noted that the forward predictive picture section 63a and the backward predictive picture section 63b of the frame memory 63 perform bank changing over when necessary, and a predetermined reference original picture stored in one or the other of them can be switchably outputted as a forward predictive picture or a backward predictive picture.

While the foregoing description has been given mainly of brightness blocks, also colour difference blocks are processed and transmitted in units of a macro block shown in Figures 2(A) or 2(B) and 3(A) or 3(B). It is to be noted that a motion vector used when a colour difference block is processed is obtained by reducing a motion vector of a corresponding brightness block to one half in each of the vertical and horizontal directions.

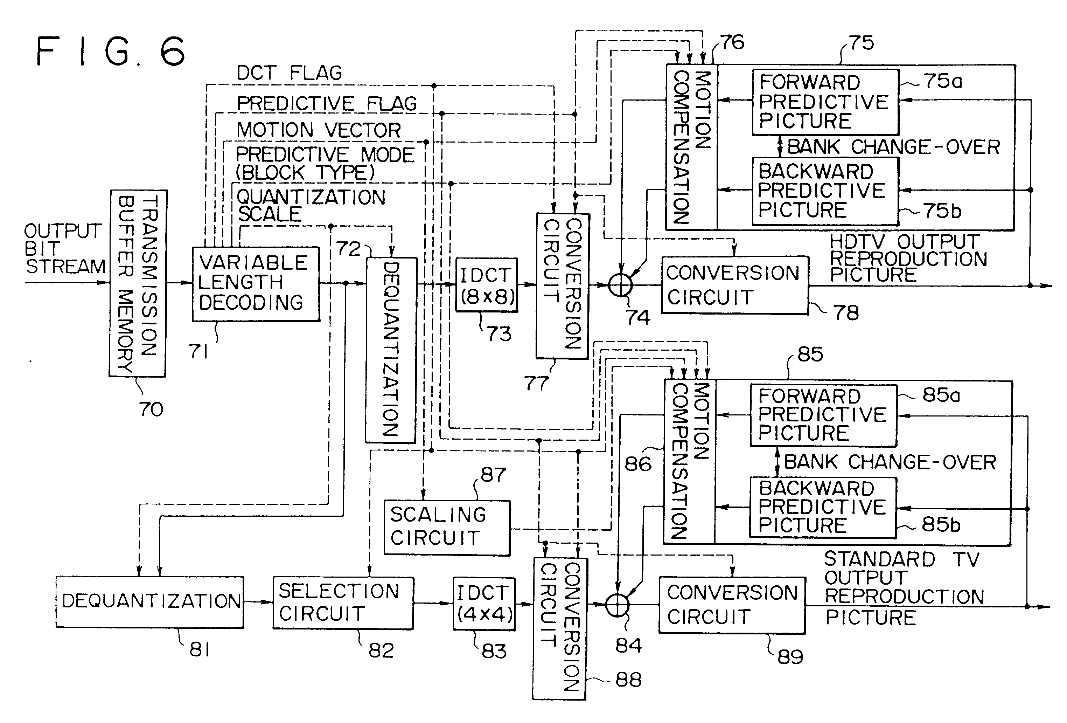

Referring now to Figure 6, there is shown a decoder. An input bit stream is inputted to the decoder from an optical disk (recording medium 8 shown in Figure 21) or a like recording medium. The input bit stream is inputted by way of a reception buffer memory 70 to and decoded by a variable length decoding circuit (IVLC) 71. As a result of the decoding, quantized data (DCT coefficients), motion vectors, predictive modes, predictive flags, DCT flags, quantization scales and so forth are obtained. Data (DCT coefficients) outputted from the variable length decoding circuit 71 are inputted to and dequantized to representative values by a dequantization circuit 72. The dequantization step is controlled in response to a quantization scale outputted from the variable length decoding circuit 71.

Quantized regenerated values (DCT coefficients) as an output of the dequantization circuit 72 are outputted as 8 x 8 values for each block. An IDCT circuit 73 performs IDCT processing of the 8 x 8 coefficients. Consequently, a block of 8 x 8 picture element data is obtained. The output of the IDCT circuit 73 is inputted to a conversion circuit 77, in which it is returned in response to a DCT flag and a predictive flag supplied thereto from the variable length decoding circuit 71 into the array condition in which it coincides with the array of data outputted from the motion compensation circuit 74. The output of the conversion circuit 77 is supplied to an arithmetic unit 74.

When picture data supplied to the arithmetic unit 74 are data of an I-picture, the data are outputted from the arithmetic unit 74 and returned in response to predictive flag supplied thereto from the variable length decoding circuit 71 by a conversion circuit 78 into those of the condition in the frame predictive mode shown in Figure 2(A) (when a frame memory 75 is constituted from a field memory, the condition of the field predictive mode (the condition shown in Figure 2(B)), whereafter they are supplied to and stored into a forward predictive picture section 75a of the frame memory 75 in order to allow production of predictive picture data for picture data (data of a P-picture or a B-picture) to be inputted to the arithmetic unit 74 later. Further, the data are outputted as they are to, for example, the format conversion circuit 10 (Figure 21) at the succeeding stage.

When picture data supplied to the arithmetic unit 74 are data of a P-picture produced using picture data of a preceding frame as predictive picture data and the forward predictive mode is set, the picture data of the preceding frame (data of the I-picture) stored in the forward predictive picture section 75a of the frame memory 75 are read out and undergo motion compensation corresponding to a motion vector outputted from the variable length decoding circuit 71 and processing corresponding to the predictive mode (block type) by the motion compensation circuit 76. Further, data are arrayed as shown in Figure 2(A) or 2(B) in response to the predictive flag. Then, the arithmetic unit 74 adds picture data (difference data) supplied thereto from the conversion circuit 77 to the data from the motion compensation circuit 76 and outputs the resulted data therefrom. The data obtained by the addition, that is, the decoded data of the P-picture, are supplied to and stored into the backward predictive picture section 75b of the frame memory 75 in order to allow production of predictive picture data for picture data (data of a B-picture or a P-picture) to be inputted to the arithmetic unit 74 later.

Even when the data are data of a P-picture, the data in the intra-picture predictive mode are not processed by particular processing by the arithmetic unit 74 and are stored as they are into the backward predictive picture section 75b similarly to the data of the I-picture.

Since the P-picture is a picture to be displayed subsequently to a succeeding B-picture, it is not outputted at this point of time to the format conversion circuit 10 at the succeeding stage as yet (as described above, the P-picture inputted succeedingly to the B-picture is processed and transmitted prior to the B-picture).

When the picture data supplied from the conversion circuit 77 are data of a B-picture, the picture data of the I-picture stored in the forward predictive picture section 75a of the frame memory 75 (in the case of the forward predictive mode), the picture data of the P-picture stored in the backward predictive picture section 75b (in the case of the backward predictive mode) or the picture data of both of the I-picture and the P-picture are read out in response to a predictive mode supplied from the variable length decoding circuit 71, and motion compensation is performed for the thus read out picture data in accordance with a motion vector outputted from the variable length decoding circuit 71 by the motion compensation circuit 76. The picture data after the motion compensation are then processed by arraying processing of data in response to a predictive flag to produce a predictive picture. However, when no motion compensation is required (in the case of the intra-picture predictive mode), no predictive picture is produced.

The data obtained by motion compensation by the motion compensation circuit 76 in this manner are added to the output of the conversion circuit 77 by the arithmetic unit 74. The addition output is returned into the signals of the condition in the frame predictive mode in response to the predictive flag by another conversion circuit 78 and then outputted to the format conversion circuit 10.

However, since the addition output is data of a B-picture and is not utilized for production of a predictive picture for any other picture at all, it is not stored into the frame memory 75.

After the picture of a B-picture is outputted, picture data of the P-picture stored in the backward predictive picture section 75b are read out and outputted by way of the motion compensation circuit 76, the arithmetic unit 74 and the conversion circuit 78. In this instance, motion compensation, arraying processing or the like is not performed.

Further, while the foregoing description has been given of processing of a brightness signal, processing of a colour difference signal is performed in a similar manner. In this instance, however, a motion vector used is obtained by reducing a motion vector for a brightness signal to one half in each of the vertical and horizontal directions.

If the picture regenerated in such a manner as described above is converted from digital to analog values, then a decoded picture of a high definition television system of a high resolution can be obtained.

The decoder described above includes, in addition to the construction for obtaining a decoded picture of a high definition television system described above, another construction for obtaining a decoded picture of a resolution equal to one fourth the resolution of the standard television system. The second construction includes a dequantization circuit 81, which dequantizes data outputted from the variable length decoding circuit 71 to a representative value in accordance with a quantization scale also outputted from the variable length decoding circuit 71 and outputs the resulted data to a selection circuit 82. It is to be noted that the dequantization circuit 81 is provided in order to obtain a standard television video output together with a high definition television video output, and when it is required to output only one of the two outputs, the dequantization circuit 81 may be omitted. In this instance, the output of the dequantization circuit 72 is supplied to the selection circuit 82.

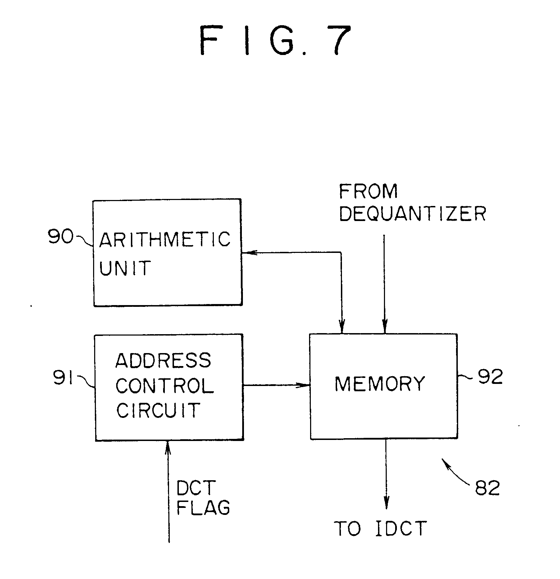

Referring now to Figure 7, the selection circuit 82 may be constituted from a calculation circuit 90, an address control circuit 91 and a memory 92. Data supplied from the dequantization circuit 81 (or 72) are written into the memory 92. Then, the data are read out from the memory 92 and outputted to an IDCT circuit 83. Writing into and reading out from the memory 92 is controlled by an address control circuit 91. While details of the writing and reading control will be hereinafter described, the selection circuit 82 selects predetermined 4 x 4 DCT coefficients from such 8 x 8 DCT coefficients as shown in Figure 4.

Referring back to Figure 6, the IDCT circuit 83 processes the inputted 4 x 4 coefficients by IDCT processing and outputs the resulted data to a conversion circuit 88. The conversion circuit 88 returns the array of the data, in response to a DCT flag and a predictive flag outputted from the variable length decoding circuit 71, into that of a condition wherein it coincides with the array of predictive picture data outputted from a motion compensation circuit 86. The conversion circuit 88 outputs the data after such array change to an arithmetic unit 84. The motion compensation circuit 86 performs motion compensation of picture data stored in a frame memory 85 in response to a motion vector and a predictive mode supplied thereto from the variable length decoding circuit 71, and then performs such array conversion of the picture data as illustrated in Figure 2(A) or 2(B) in response to a predictive code to produce predictive picture data.

The data outputted from the motion compensation circuit 86 are added to the output of the conversion circuit 88. The array condition of the resulted data is converted, in response to the predictive flag, into the condition in the frame predictive mode (the condition of the field predictive mode when the frame memory 85 is constituted from a field memory), and then the data are outputted as standard television picture data. It is to be noted that, since motion at the motion compensation circuit 86 is equal to about one half the motion at the motion compensation circuit 76, a motion vector outputted from the variable length decoding circuit 71 is converted to one half by scale conversion by a scaling circuit 87 and then supplied to the motion compensation circuit 86.

In particular, when the predictive mode in the encoder of Figure 1 is determined as the frame predictive mode by the predictive discrimination circuit 54 of the encoder, also the predictive mode in the decoder is set to the frame predictive mode. On the other hand, when the predictive mode in the encoder is determined as the field predictive mode, also the predictive mode in the decoder is set to the field predictive mode. In short, when the the motion compensation circuit 64 of the encoder forms a predictive picture in the frame predictive mode, the motion compensation circuit 86 of the decoder cooperates with the scaling circuit 87 to form a predictive picture in the frame predictive mode similarly. On the other hand, when the motion compensation circuit 64 forms a predictive picture in the field predictive mode, the motion compensation circuit 86 cooperates with the scaling circuit 87 to form a predictive picture in the field predictive mode similarly.

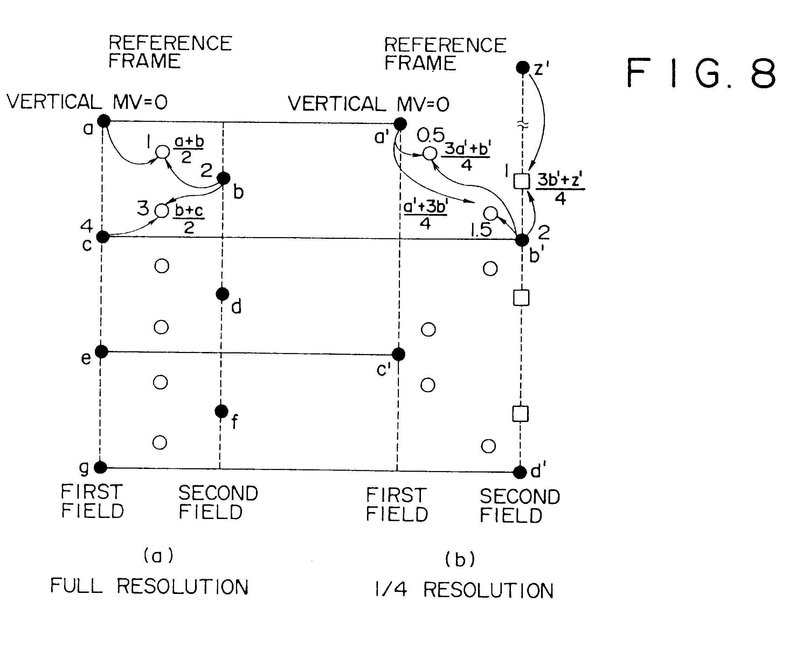

Subsequently, the relationship between motion compensation and the frame or field predictive mode will be described. In the case of the frame predictive mode (frame predictive mode (1)), in motion compensation of the encoder performed by the motion compensation circuit 64 (similar with motion compensation of the motion compensation circuit 76 of a high definition television decoder block), a single predictive frame is formed as a predictive picture from a first field (odd-numbered field) including such picture elements a, c, e, g, ... as shown in (a) of Figure 8 and a second field (even-numbered field) including such picture elements b, d, f, ... as shown in (a) of Figure 8. Meanwhile, in motion compensation for a standard television decoder block performed by the motion compensation circuit 86 of the decoder, a single predictive frame is formed as a predictive picture from a first field including such picture elements a', c', ... as shown in (b) of Figure 8 and a second field including such picture elements z', b', d', ... (the distance between z' and b' and the distance between b' and d' are equal to each other) as shown in (b) of Figure 8.

In order to convert data of a high resolution (high definition television) into data of a 1/4 resolution, picture elements should be thinned out to one half in both of the horizontal direction and the vertical direction. Now, considering only thinning out in the vertical direction, since a frame has an interlace structure based on two fields, if lines are thinned out to one half in the vertical direction, then data of one field (in the case shown in Figure 8, the first field) after all correspond to data of one frame of a 1/4 resolution (2 fields). In the case shown, the picture elements a, e, ... among the picture elements a, c, e, g, ... of the first field of a high resolution correspond to the picture elements a', c', ... of the first field of a low resolution, and the picture elements c, g, ... correspond to the picture elements b', d', ... of the second field of a low resolution.

Describing, for example, the picture element a, in the local decoder ((a) in Figure 8) of the encoder, if 0, 1, 2, 3 or 4 (1 of the motion vector indicates an offset corresponding to 0.5 picture elements in the vertical directions of a screen of a high resolution) is outputted as a motion vector for motion compensation for the picture element a (it is assumed that the motion vector indicates only motion in the vertical direction) from the motion vector detection circuit 50, then a, (a + b)/2, b, (b + c)/2 or c is outputted as a picture element of a predictive picture from the motion compensation circuit 64. In particular, an interpolation picture element is formed when the motion vector is equal to 1 or 3.

On the other hand, on the standard television decoder block side ((b) in Figure 8), when 0, 1, 2, 3 or 4 is outputted as a motion vector for motion compensation for the picture element a' from the variable length decoding circuit 71 (when the motion vector outputted from the scaling circuit 87 is 0, 0.5, 1, 1.5 or 2), a', (3a' + b')/4, (3b' + z')/4, (a' + 3b')/4 or b is outputted as a picture element of a predictive picture from the motion compensation circuit 86. In particular, when the motion vector is 1, 2 or 3 (when the motion vector outputted from the scaling circuit 87 is 0.5, 1 or 1.5), an interpolation picture element is formed. This similarly applies also where the motion vector is greater than 5).

As seen from Figure 8, picture element data of a low resolution (1/4 resolution) correspond to picture element data of a high resolution (full resolution) of the encoder such that the parities (fields) and the positions of them coincide with each other. In particular, when the motion vector is 1 or 3, picture element data of a high resolution are interpolated from the picture element data a and c of the first field and the picture element data b of the second field ((a + b)/2 or (b + c)/2). On the other hand, also picture element data of a low resolution are interpolated, when the motion vector is 1 or 3 (when the motion vector outputted from the scaling circuit 87 is 0.5 or 1.5), from the picture element data a' of the first field and the picture element data b' of the second field. Accordingly, they coincide with each other in parity (field) (both of them are interpolated from the first and second fields). Further, since the weighting values of the picture elements of them are adjusted, the positions of them in the vertical direction coincide with each other.

Further, when the motion vector is equal to 2 (when the motion vector outputted from the scaling circuit 87 is equal to 1), since the picture element data b of a high resolution is data of the second field, also a corresponding picture element of a low resolution is interpolated from the picture elements z' and b' of the second field ((3b' + z')/4). Consequently, the parities and the positions in the vertical direction of them coincide with each other.

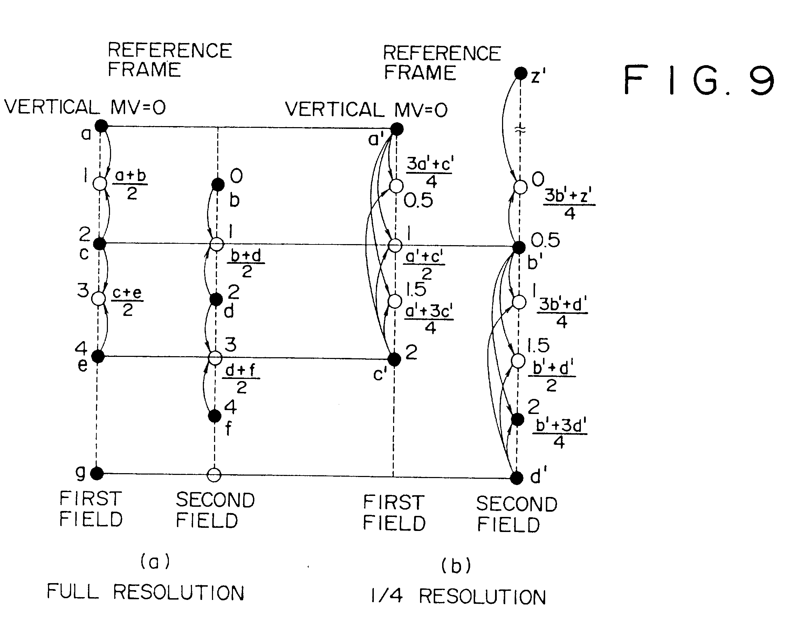

Subsequently, motion compensation in the field predictive mode will be described with reference to Figure 9. In this instance, in the local decoder of the encoder, as seen from (a) of Figure 9, picture elements (a + c)/2 and (c + e)/2 of a first predictive field are formed as a predictive picture from a first field including picture elements a, c, e, g, ..., and picture elements (b + d)/2 and (d + f)/2 of a second predictive field are formed as another predictive picture from a second field including picture elements b, d, f, ... Meanwhile, in the standard television decoder block, as seen from (b) of Figure 9, picture elements (3a' + c')/4, (a' + c')/2 and (d' + 3c')/4 of a first predictive field are formed as a predictive picture from a first field including picture elements a', c', ... and picture elements (3b' + z')/4, (3b' + d')/4 and (b' + d')/2 of a second predictive field are formed as a predictive picture from a second field including picture elements z', b', d' ... (the distance between z' and b' and the distance between b' and d' are equal to each other).

In particular, in the case of motion compensation, for example, for the picture element a of the first field in accordance with a motion vector, in the encoder, when 0, 1, 2, 3 or 4 is given as a motion vector from the motion vector detection circuit 50, a, (a + c)/2, c, (c + e)/2 or e is outputted as a picture element of a predictive picture from the motion compensation circuit 64, respectively. When the motion vector is 1 or 3, the picture element is interpolated.

Meanwhile, on the standard television decoder block side, when 0, 1, 2, 3 or 4 is give as a motion vector from the variable length decoding circuit 71 (when the motion vector outputted from the scaling circuit 87 is 0, 0.5, 1, 1.5 or 2), a', (3a' + c')/4, (a' + c')/2, (a' + 3c')/4 or c' is outputted as a picture element of a predictive picture from the motion compensation circuit 86, respectively. When the motion vector is 1, 2 or 3 (when the motion vector outputted from the scaling circuit 87 is 0.5, 1 or 1.5), an interpolation picture element is formed by interpolation so that the position of the corresponding picture element may coincide with that in the encoder.

On the other hand, in motion compensation of the picture element of the second field, when 0, 1, 2, 3 or 4 is given as a motion vector to the encoder, b, (b + d)/2, d,(d + f)/2 or f is outputted as a picture element of a predictive picture from the motion compensation circuit 64, respectively. Meanwhile, on the standard television decoder block side, when 0, 1, 2, 3 or 4 is given as a motion vector (when the motion vector outputted from the scaling circuit 87 is 0, 0.5, 1, 1.5 or 2), (3b' + z')/4, b', (3b' + d')/2, (b' + d')/2 or (b' + 3d')/4 is outputted as a picture element of a predictive picture from the motion compensation circuit 86, respectively.

An original picture element which corresponds to the picture element b of the second field of a full resolution is not present in the second field of a 1/4 resolution. If the picture element b' is made coincide with the picture element b, then since the positions of them in the vertical direction do not coincide with each other, also the motion compensated picture element is displaced from the original picture element. Therefore, the picture element (3b' + z')/4 is produced at the position at which it coincides with the picture element b.

In each field, since each interpolation data is produced from data in the field, also the parities coincide with each other.

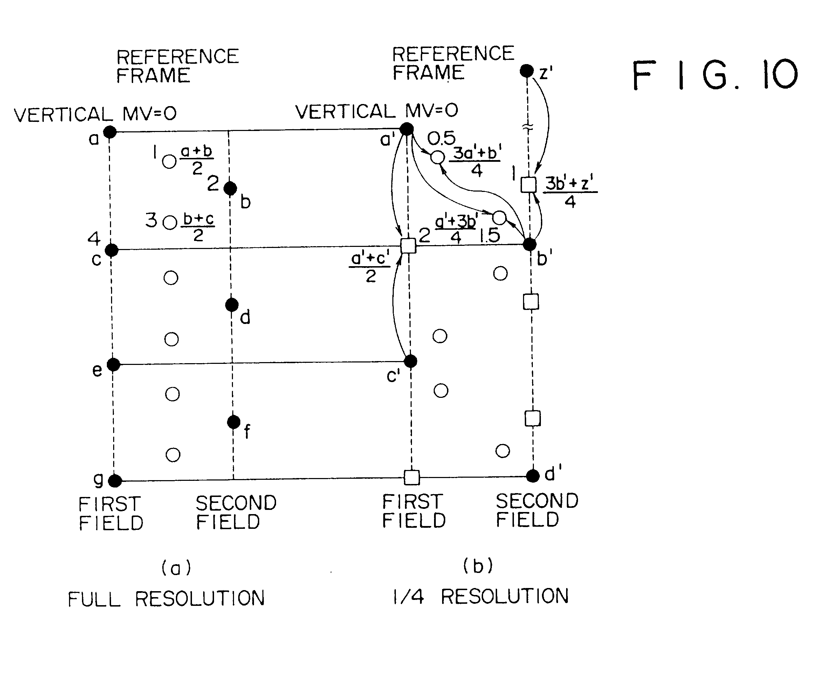

A different manner of motion compensation in the frame predictive mode (frame predictive mode (2)) will be described subsequently with reference to Figure 10. The present manner of motion compensation is different from the manner of motion compensation in the frame predictive mode (1) of Figure 8 in processing on the standard television decoder block side. While a reference picture element when the motion vector is 1, 2 or 3 (when the motion vector outputted from the scaling circuit 87 is 0.5, 1 or 1.5) can be produced by interpolation of the picture element a', b' and/or z' similarly as in the case of Figure 8, a reference picture element when the motion vector is 4 (when the motion vector outputted from the scaling circuit 87 is 2) is produced by interpolation of the picture elements a' and c' of the first field since it is referred to from a field of a same parity as a reference picture element in the encoder, and the picture element of a predictive picture to be outputted from the motion compensation circuit is (a' + c')/2. In other words, in this instance, the picture element b' is used only for interpolation of some other picture element and is not itself outputted as a reference picture element.

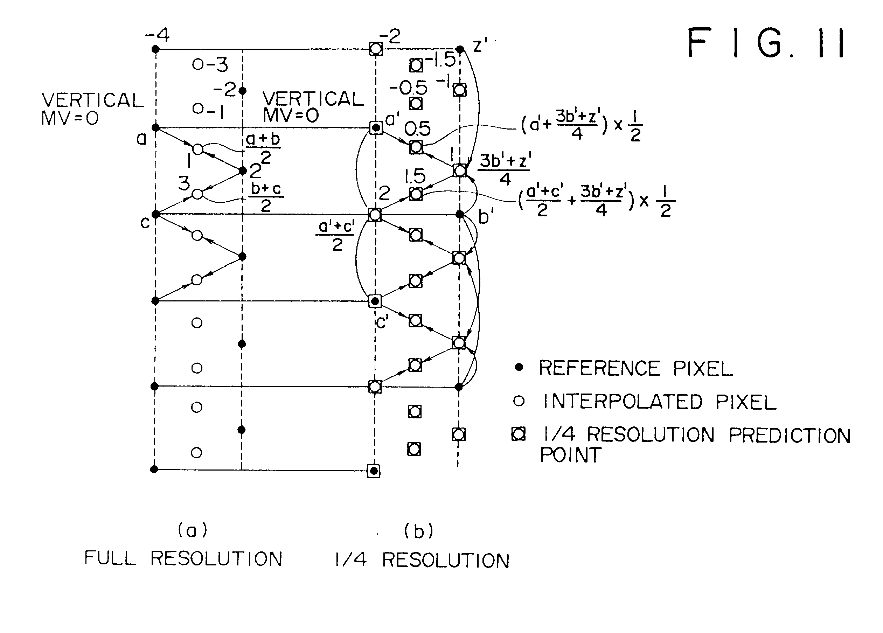

Figure 11 is a further manner of motion compensation in the frame predictive mode (frame predictive mode (3)). In the present manner of motion compensation, in the case of a 1/4 resolution, when the motion vector is 1 or 3 (when the motion vector outputted from the scaling circuit 87 is 0.5 or 1.5), a reference picture element is either interpolated as (1/2) (a' + (3b' + z')/4) from the picture elements a' and (3b' + z')/4 or interpolated as (1/2)((a' + c')/2 + (3b' + z')/4) from the picture elements (a' + c')/2 and (3b' + z')/4. Except this, the present manner of motion compensation is the same as the manner of motion compensation of Figure 10.

When motion compensation is performed in response to the frame or field predictive mode (predictive flag) so that coincidence in parity and position may be established in this manner, since mismatch errors arising from incoincidence between a predictive picture of the encoder and another predictive picture of the low resolution decoder are reduced, such a situation is reduced that a picture does not exhibit smooth motion due to the loss of an interlace structure.

Subsequently, processing of the selection circuit 82 of Figure 7 will be described.

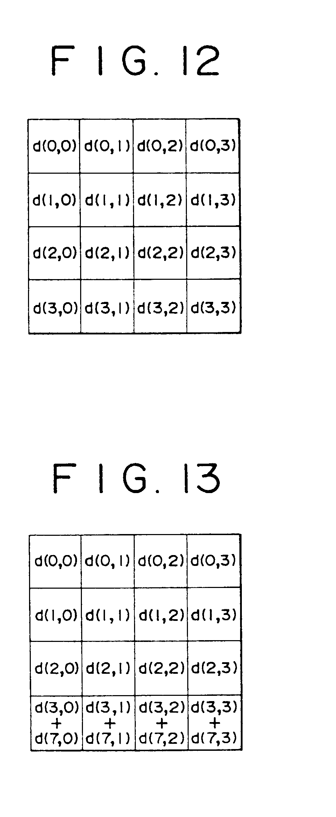

Such 8 x 8 coefficient data supplied from the dequantization circuit 82 as seen in Figure 4 are stored into the memory 92 of the selection circuit 83. When the predictive flag supplied from the variable length decoding circuit 71 represents the frame DCT mode, the address control circuit 91 reads out 4 x 4 data at the left upper corner and 1 x 4 data at the left lower corner of the table of Figure 4 and outputs the data to the arithmetic circuit 90. The arithmetic circuit 90 adds the four data d(7, 0), d(7, 1), d(7, 2) and d(7, 3) of the eighth row to the four data d(3, 0), d(3, 1), d(3, 2) and d(3, 3) of the fourth row, respectively. As a result, the 4 x 4 coefficients sampled out first and shown in Figure 12 are changed to 4 x 4 coefficients shown in Figure 13. In particular, while the coefficients in the upper three rows in Figure 13 are the same as those in Figure 12, the data in the lowermost row are d(3, 0) + d(7, 0), d(3, 1) + d(7, 1), d(3, 2) + d(7, 2) and d(3, 3) + d(7, 3). The data are written into the memory 92.

Four data corresponding to high frequency components arising from motion between fields of a same frame of an interlace picture are arranged at the four left data in the eighth row shown in Figure 4. Since the four data are added to the corresponding data in the fourth row which correspond to a highest frequency in the low frequency region (4 x 4 data), if the 4 x 4 coefficients (Figure 13) are read out from the address control circuit 91 and supplied to the IDCT circuit 83 so as to be processed by IDCT processing, then the loss of an interlace structure which is caused by sampling out only 4 x 4 coefficient data at the left upper corner in the low frequency region from within 8 x 8 DCT coefficient data while removing the other coefficient data is reduced, and a picture, which otherwise exhibits unnatural motion due to the loss of an interlace structure, is regenerated exhibiting smooth motion.

While high frequency components arising from interlace are included in and around the lowermost row of 8 x 8 DCT coefficient data in the frame DCT mode, such components are not contained in the lowermost row of 8 x 8 DCT coefficients in the field DCT mode. Accordingly, although such processing as illustrated in Figure 13 is performed in the frame DCT mode, it is not performed in the field DCT mode. In this instance, the processing illustrated in Figure 12 is performed.

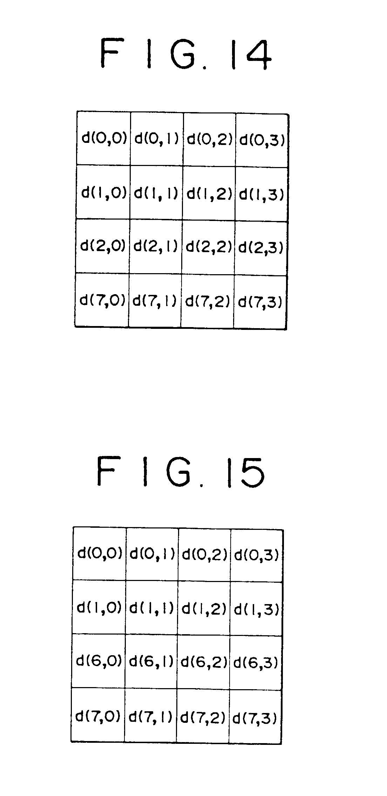

Figure 14 illustrates another manner of processing of the selection circuit 82 in the frame DCT mode. In the present manner of processing, a sum D3 of absolute values of eight data d(3, 0) to d(3, 7) in the fourth row of Figure 4 is calculated by the arithmetic unit 90. Similarly, a sum D7 of absolute values of eight data d(7, 0) to d(7, 7) in the eighth row is calculated by the arithmetic unit 90. Further, the arithmetic unit 90 compares the sums D3 and D7 with each other, and, if the sum D3 is greater than the sum D7, it selects the data d(3, 0) to d(3, 3) as the four data of the fourth row of the 4 x 4 coefficients, but on the contrary if the sum D7 is greater than the sum D3, it selects the data d(7, 0) to d(7, 3). Figure 14 illustrates the condition in this instance.

In particular, that the sum D3 is greater than the sum D7 means that the picture exhibits motion of a comparatively small amount between the two fields in the frame. Accordingly, in this instance, not the data d(7, 0) to d(7, 3) corresponding to high frequency components but the data d(3, 0) to d(3, 3) corresponding to low frequency components are selected. On the contrary, when the sum D7 is greater than the sum D3, since the picture exhibits motion of a comparatively great amount, the data d(7, 0) to d(7, 3) corresponding to higher frequency components are selected.

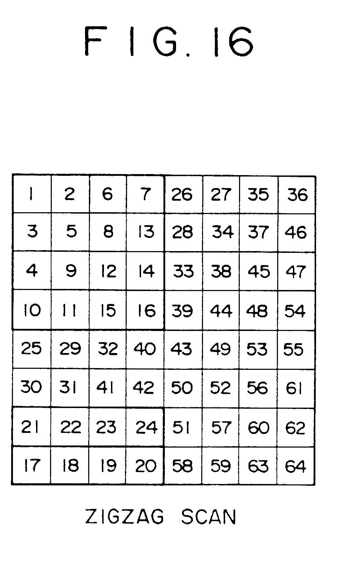

Figure 15 illustrates a further manner of processing. In the present manner of processing, when the sum D3 described above is greater than the sum D7, such coefficients as shown in Figure 12 are selected as the 4 x 4 coefficients, but when the sum D7 is greater than the sum D3, four left side data d(6, 0) to d(6, 3) in the seventh row in Figure 4 and four left side data d(7, 0) to d(7, 3) in the eighth row are selected, and the 2 x 4 data are replaced with four left side data d(2, 0) to d(2, 3) in the third row and four left side data d(3, 0) to d(3, 3) in the fourth row, respectively. In short, such 4 x 4 data as seen in Figure 15 are obtained. In the present manner of processing, higher frequency components are contained by a greater amount than in the manner of processing illustrated in Figure 14.

It is to be noted that, when the predictive flag supplied from the variable length decoding circuit 71 indicates the frame predictive mode and the selection circuit 82 determines that the sum D3 is greater than the sum D7, motion compensation may be performed in the frame predictive mode (1), but when the sum D7 is greater than the sum D3, motion compensation may be performed in the frame predictive mode (2). This is because, when the sum D3 is greater than the sum D7, since the picture exhibits motion of a small amount between the fields of the frame as described above, b' - (a' + c')/2, and consequently, even if (a' + c')/2 is not produced by interpolation, a sufficient predictive picture can be obtained.

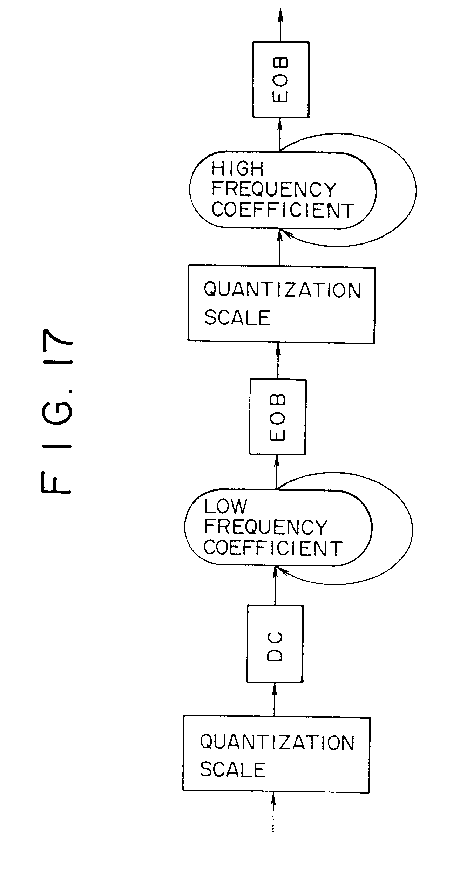

Subsequently, a method of zigzag scanning when such processing as described above is to be executed will be described. In order to realize the three manners of processing described above, it is possible, similarly as in the prior art, for the variable length coding circuit 58 of the encoder to scan 8 x 8 coefficients in a zigzag pattern such that, for example, as shown in Figure 5, the scanning point first moves rightwardly from the number 1 at the left upper corner to the number 2 on the right side and then moves to the number 3 on the obliquely left lower side and then to the number 4 below the number 3, whereafter it advances to the number 5 on the obliquely right upper side. However, if zigzag scanning is performed in such a manner as, for example, in Figure 16, then data can be transmitted in a higher efficiency.

In the manner of zigzag scanning illustrated in Figure 16, zigzag scanning is first performed within the range of 4 x 4 coefficients at the left upper corner in 8 x 8 coefficients. In particular, the coefficient at the number 1 at the left upper corner is first transmitted, and then the coefficient at the number 2 on the right side to the number 1 is transmitted. Thereafter, the scanning point moves to the number 3 on the obliquely left lower side to the number 2, and then to the number 4 below the number 3, whereafter it moves to the number 5 on the obliquely right upper side to the number 4. The 16 coefficients are transmitted in a similar manner. Subsequently, four left side coefficients of the numbers 17 to 20 in the eighth row are successively transmitted, and thereafter, four left side coefficients of the numbers 21 to 24 in the seventh row are successively transmitted beginning with the leftmost one. Then, after a total of 24 coefficients are transmitted in this manner, the scanning point advances to the coefficient at the number 25 at the leftmost position in the fifth row, and zigzag scanning is performed successively in the oblique direction except the coefficients which have been transmitted already.

The transmission by zigzag scanning is illustrated in a syntax diagram of Figure 17. Referring to Figure 17, a quantization scale is transmitted first, and then a DCT coefficient which is indicated at the number 1 in Figure 16 and represents a dc component is transmitted. Subsequently, DCT coefficients of low frequencies indicated at the numbers 2 to 4 in Figure 16 are transmitted successively. Then, after the 24 coefficients are transmitted, a signal EOB representative of the end of the block is sent out.

After the signal EOB is sent out, a dequantization scale is sent out again. The first quantization scale indicates a quantization step which is used until the first EOB signal is sent out, and the second quantization scale indicates another quantization step which is used for coefficients to be transmitted later. After the second quantization scale is sent out, the remaining coefficients of the numbers 25 to 64 in Figure 16 are successively transmitted in the order of the numbers. Then, after the 64th coefficient is transmitted, another EOB signal indicative of the end of the block is transmitted again. The EOB signals are generated by an EOB generator 58a built in the variable length coding circuit 58 of Figure 1.

If data are transmitted in such an order as described above, when the selection circuit 82 of the decoder shown in Figure 6 receives the first EOB signal, it may skip the coefficients which are transmitted thereto since then and then start its processing beginning with a coefficient transmitted immediately after the second EOB signal is thereafter transmitted thereto. On the other hand, in the high definition television signal system, the IDCT circuit 73 ignores the first EOB signal and detects the second EOB signal as an end signal of the block.

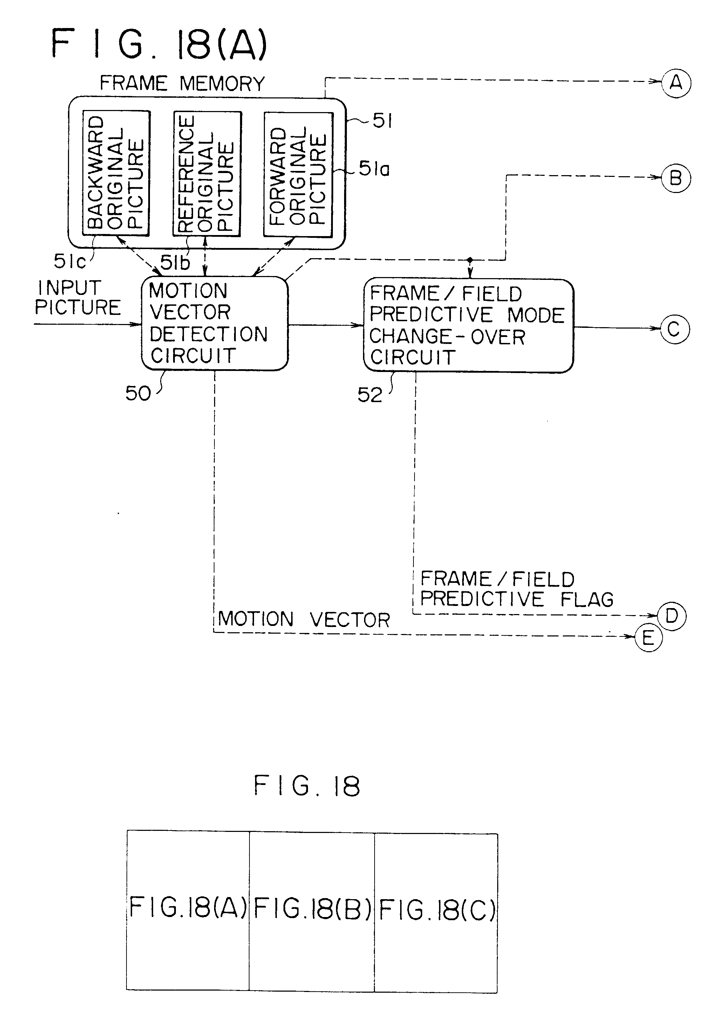

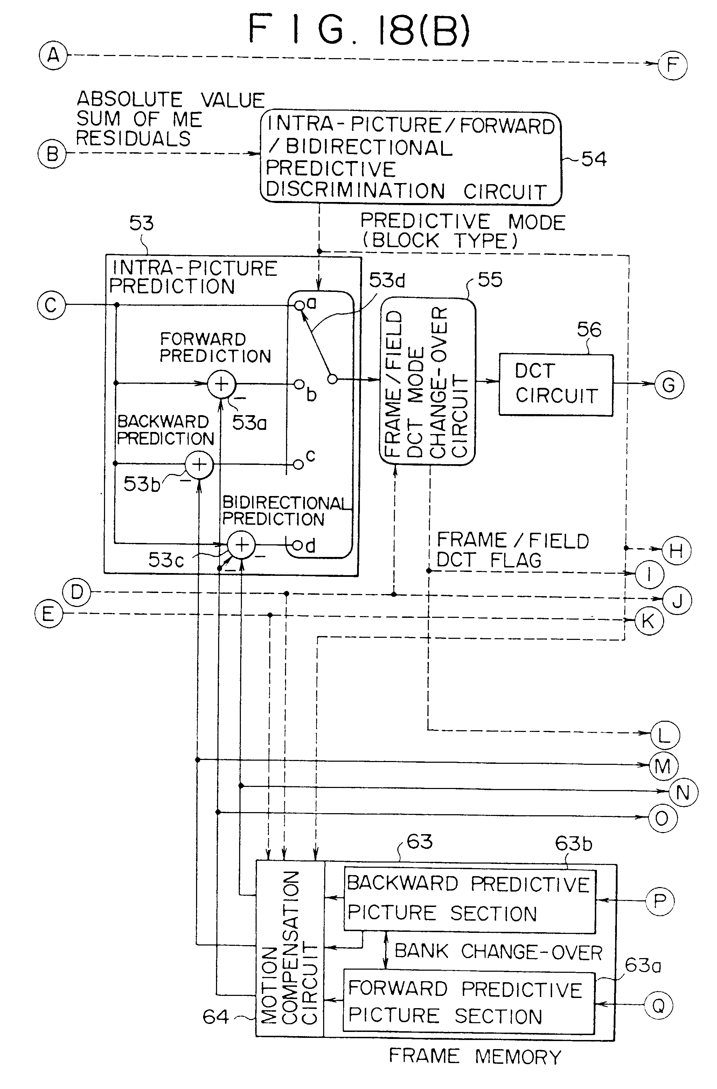

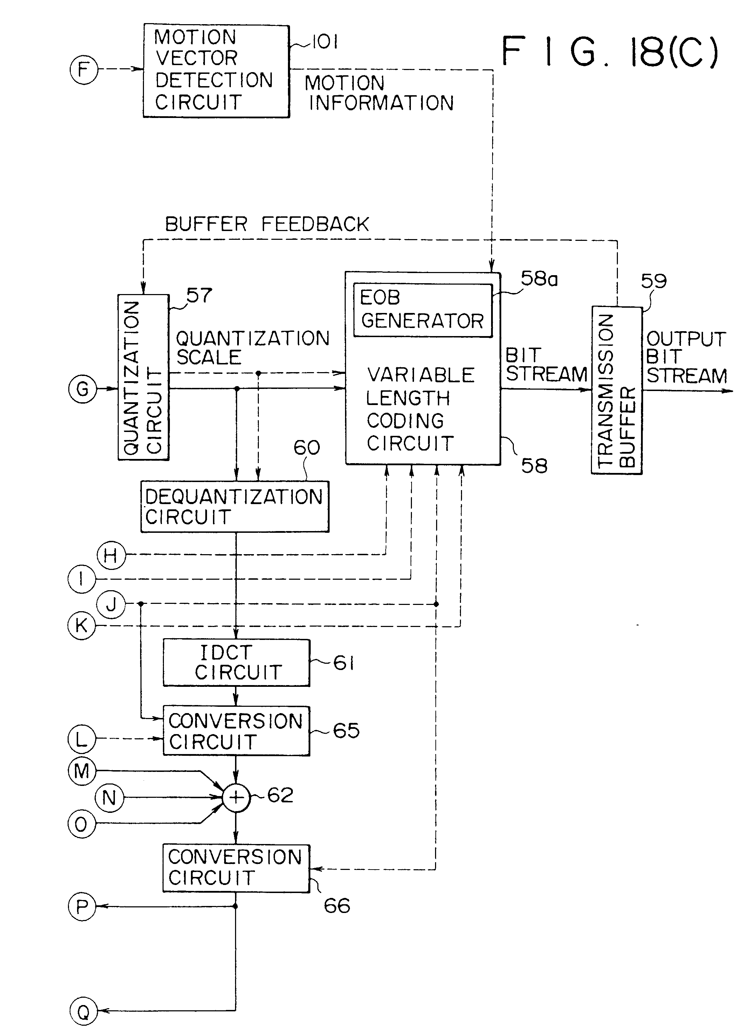

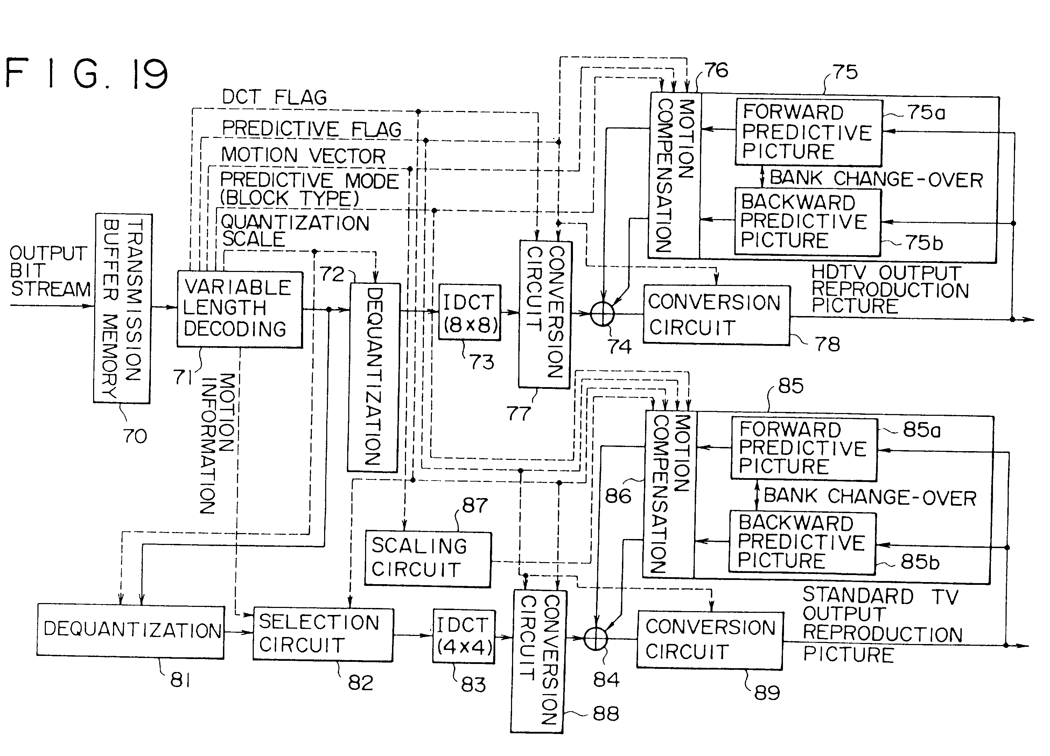

While, in the foregoing description, a manner of processing is selected by the decoder side, it is otherwise possible for the encoder side to given an instruction of processing. FIGS. 18 and 19 respectively show an encoder and a decoder constructed in a manner just described. In particular, in the encoder shown in Figure 18, a motion vector detection circuit 101 (the motion vector detection circuit 50 may serve also as the motion vector detection circuit 101) detects a motion vector of a block from picture data for one field stored in a frame memory 51. The reason why a motion vector is detected not from data for one frame but from data for one field is that it is intended to detect motion in interlace, that is, motion between an odd-numbered field and an even-numbered field. The motion vector (motion information) detected by the motion vector detection circuit 101 is supplied to a variable length coding circuit 58, from which it is transmitted as data of 1 bit or 2 bits and as a bit stream to the decoder side.

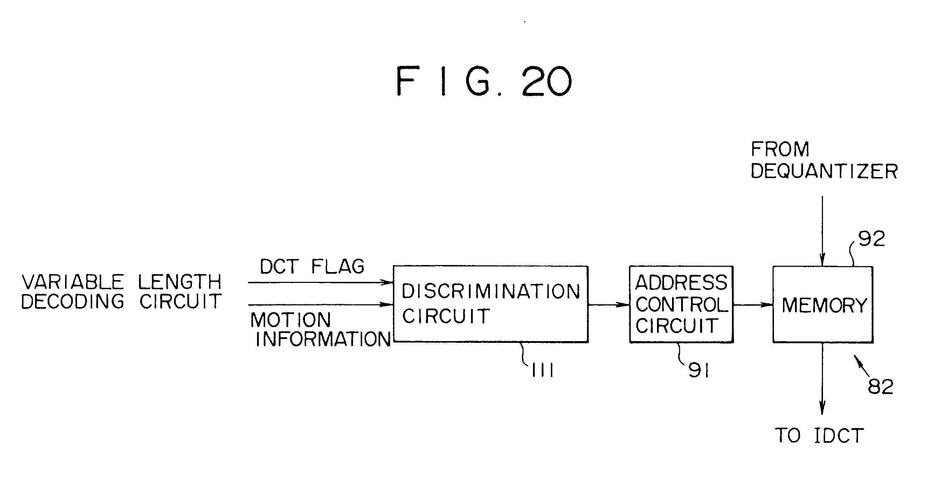

On the decoder side, as shown in Figure 19, a variable length decoding circuit 71 detects the motion information transmitted thereto from the encoder side and controls a selection circuit 82 in accordance with the motion information. In particular, the selection circuit 82 is constructed as shown, for example, in Figure 20. Referring to Figure 20, the motion information supplied thereto from the variable length decoding circuit 71 is discriminated by a discrimination circuit 111, and an address control circuit 91 is controlled in accordance with a result of the discrimination to control data to be read out from the memory 92.

Accordingly, in order to allow two of the manners of processing illustrated in FIGS. 13 to 15 to be executed, if a predetermined flag of one bit is transmitted from the encoder side, then two of the manners of processing illustrated in FIGS. 13 to 15 can be executed on the decoder side in response to the flag.

Furthermore, if, for example, 2 bits are prepared for such motion information as described above, then a total of four kinds of data can be sent out. Therefore, motion can be divided into fourth types including a great amount of motion, a medium amount of motion, a small amount of motion and a stopping condition, and when the amount of motion is great, the processing illustrated in Figure 15 may be executed; when the amount of motion is medium, the processing illustrated in Figure 14 may be executed; when the amount of motion is small, the processing illustrated in Figure 13 may be executed; and when the picture is in a stopping condition, the processing illustrated in Figure 12 may be executed.

While, in the foregoing description, coefficient data of the fourth row or coefficient data of the third and fourth rows of 4 x 4 coefficient data are replaced by coefficient data of the eighth row or coefficient data of the seventh and eighth rows, respectively, at least one coefficient data may be replaced. Or on the contrary, the number of rows to be replaced may be increased to three.

Further, while data along a row or rows are replaced in the foregoing description, data along a column or columns may be replaced alternatively.

Furthermore, while picture data are processed by DCT processing in the foregoing description, the present invention can be applied to any other orthogonal transformation than the DCT.

Further, while, in the foregoing description, 8 x 8 quantized data outputted from the quantization circuit 57 are coded as they are into variable length codes and transmitted on the encoder side and, when a picture of the standard television system is to be obtained, 4 x 4 data are sampled out on the decoder side, when 4 x 4 quantized data on the low frequency side (at the left upper corner) are separated from the other quantized data and then the 4 x 4 quantized data and the other data are individually coded into variable length codes and transmitted on the encoder side, in order to obtain a picture of the standard television system, only the 4 x 4 quantized data on the low frequency side (at the left upper corner) may be decoded as they are, but in order to obtain a picture of a full resolution, both of the 4 x 4 quantized data and the other data may be decoded by variable length decoding into two kinds of quantized data, which are dequantized subsequently.

As apparent from the foregoing description, according to the present invention, when coefficient data of a particular range are sampled out from within a predetermined number of coefficient data and inverse orthogonal transformation is to be performed for the thus sampled out coefficient data, the coefficient data are processed so that they include those coefficient data which are not included in the particular range. Further, motion compensation is performed in response to a predictive flag so that a predictive picture and a parity of fields on the decoder side may coincide with those on the encoder side. Consequently, such a situation that smooth motion of the picture is disturbed by the loss of an interlace structure is eliminated or minimized.

Having now fully described the invention, it will be apparent to one of ordinary skill in the art that many changes and modifications can be made thereto without departing from the scope of the invention as set forth herein.

## Claims

1. A picture signal decoding method for decoding a signal of the type obtained by a coding method as defined in claim 58, comprising the steps of:
decoding the transmission data by variable length decoding to obtain decoded data and outputting the decoded data; and dequantizing the decoded data to obtain coefficient data and outputting the coefficient data;
sampling out the low order coefficient data of a first block (d0,0 to d7,7) formed by orthogonal transformation of picture element data to form the coefficient data of a second block (d0,0 to d3,3), the second block containing fewer coefficient data items than the first block; characterised by
replacing at least one of the coefficient data (d3,0 to d3,3) in the second block by a replacement value dependent upon a corresponding one or ones of the coefficient data (d7,0 to d7,3) in the first block but outside the second block; and
performing inverse orthogonal transformation for the coefficient data of the second block.

2. A picture signal decoding method according to claim 1, wherein the replacement value is the corresponding one or ones of the coefficient data in the first block.

3. A picture signal decoding method according to any one of claims 1 and 2, wherein the first block includes m x n coefficient data (d0.0 to d7,7) while the second block includes j x k coefficient data (d0,0 to d3,3), j being smaller than m, k being smaller than n, and the inverse orthogonal transformation being performed for data obtained by replacing successive ones of the coefficient data of the j-N+1th row to the jth row in the second block by corresponding ones of the coefficient data of the m-N+1th row to the mth row in the corresponding columns of the first block. respectively, N being 1, 2, 3 ..., j-1.

4. A picture signal decoding method according to any one of claims 1, 2 and 3 wherein the orthogonal transformation is a discrete cosine transform, and the inverse orthogonal transformation is an inverse discrete cosine transform.

5. A picture signal decoding method according to any one of claims 1. 2, 3 and 4 wherein the picture element data are picture element data of a frame formed from two fields and having an interlace structure, and where the coefficient data of the first block are produced based on a difference from a predictive picture for which motion compensation has been performed in a frame predictive mode or a field predictive mode, motion compensation being performed in response to a predictive mode of the first block to produce a predictive picture for the second block.

6. A picture signal decoding method according to claim 5, wherein, where the coefficient data of the first block are produced based on the difference from the predictive picture for which the motion compensation has been performed in the frame predictive mode, motion compensation for the second block is performed so that a field of picture elements of the predictive picture for the second block may coincide with a corresponding field of picture elements of a predictive picture for the first block.

7. A picture signal decoding method according to claim 6, wherein, when the picture elements of the predictive picture for the first block are produced by interpolation upon the motion compensation, also corresponding picture elements of the predictive picture for the second block are produced by interpolation.

8. A picture signal decoding method according to any one of claims 5 and 6, wherein, when picture elements corresponding to the picture elements of the predictive picture for the first block are present in the predictive picture for the second block upon the motion compensation, the picture elements are used for motion compensation.

9. A picture signal decoding method according to any one of claims 5 and 6, wherein, where the coefficient data of the first block are produced based on the difference from the predictive picture for which the motion compensation has been performed in the field predictive mode, motion compensation for the second block is performed so that the positions of the picture elements of the predictive picture for the second block may coincide with the positions of corresponding picture elements of a predictive picture for the first block.

10. A picture signal decoding method as claimed in claim 1, wherein the replacement value is a sum or sums of the at least one coefficient data in the second block and a corresponding one or ones of the coefficient data in the first block.

11. A picture signal decoding method according to claim 10, wherein the first block includes m x n coefficient data while the second block includes j x k coefficient data, j being smaller than m, k being smaller than n, and the inverse orthogonal transformation is performed for data obtained by replacing successive ones of the coefficient data in the jth row of the second block with a sum or sums between the coefficient data of the jth row in the second block and corresponding ones of the coefficient data in the mth row of the first block in the respective corresponding columns.

12. A picture signal decoding method according to claim 10, wherein m is equal to n and j is equal to k.

13. A picture signal decoding method according to claim 12, wherein m and n are equal to 8, and j and k are equal to 4.

14. A picture signal decoding method according to any one of claims 10 to 13, wherein the orthogonal transformation is a discrete cosine transform, and the inverse orthogonal transformation is an inverse discrete cosine transform.

15. A picture signal decoding method according to any one of claims 10 to 14, wherein the picture element data are picture element data of a frame formed from two fields and having an interlace structure, and where the coefficient data of the first block are produced based on a difference from a predictive picture for which motion compensation has been performed in a frame predictive mode or a field predictive mode, motion compensation being performed in response to a predictive mode of the first block to produce a predictive picture for the second block.

16. A picture signal decoding method according to claim 15, wherein, where the coefficient data of the first block are produced based on the difference from the predictive picture for which the motion compensation has been performed in the frame predictive mode, motion compensation for the second block is performed so that a field of picture elements of the predictive picture for the second block may coincide with a corresponding field of picture elements of a predictive picture for the first block.

17. A picture signal decoding method according to claim 16, wherein, when the picture elements of the predictive picture for the first block are produced by interpolation upon the motion compensation, also corresponding picture elements of the predictive picture for the second block are produced by interpolation.

18. A picture signal decoding method according to any one of claims 15 and 16, wherein, when picture elements corresponding to the picture elements of the predictive picture for the first block are present in the predictive picture for the second block upon the motion compensation, the picture elements are used for motion compensation.

19. A picture signal decoding method according to any one of claims 15 and 16, wherein, where the coefficient data of the first block are produced based on the difference from the predictive picture for which the motion compensation has been performed in the field predictive mode, motion compensation for the second block is performed so that the positions of the picture elements of the predictive picture for the second block may coincide with the positions of corresponding picture elements of a predictive picture for the first block.

20. A picture signal decoding method as claimed in claim 1, wherein:
the sampling step comprises sampling out from m x n coefficient data of a first block formed by orthogonal transformation of picture element data of a frame formed from two fields and having an interlace structure, a second block including j x k coefficient data, j being smaller than m and k being smaller than n; and further comprising the steps of
discriminating motion between the two fields of the first block; and
selecting, in response to a result of the discrimination, one of a first inverse orthogonal transformation mode in which the coefficient data of the second block are transformed as they are by inverse orthogonal transformation and a second inverse orthogonal transformation mode in which the inverse orthogonal transformation is performed for data obtained by replacing at least one of the coefficient data in the second block by a corresponding one or ones of the coefficient data in the first block but outside the second block.

21. A picture signal decoding method according to claim 20, wherein m is equal to n and j is equal to k.

22. A picture signal decoding method according to claim 21, wherein m and n are equal to 8, and j and k are equal to 4.

23. A picture signal decoding method according to any one of claims 20 to 22, wherein the orthogonal transformation is a discrete cosine transform, and the inverse orthogonal transformation is an inverse discrete cosine transform.

24. A picture signal decoding method as claimed in claim 1, wherein:
the sampling step comprises sampling out from m x n coefficient data of a first block formed by orthogonal transformation of picture element data of a frame having an interlace structure formed from two fields, a second block including j x k coefficient data, j being smaller than m and k being smaller than n; and further comprising the steps of
discriminating motion between the two fields of the first block; and
selecting, in response to a result of the discrimination, one of a first inverse orthogonal transformation mode in which the coefficient data of the second block are transformed as they are by inverse orthogonal transformation and a second inverse transformation mode in which the inverse orthogonal transformation is performed for data obtained by replacing successive ones of the coefficient data of the j-N + 1th row to the jth row in the second block by corresponding ones of the coefficient data of the m-N+1th row to the mth row in the corresponding columns of the first block, respectively, N being 1, 2, 3 j-1.

25. A picture signal decoding method according to claim 24, wherein motion between the two fields is discriminated from a result of comparison between an absolute value sum J of the coefficient data of the jth line in the first block and another absolute value sum M of the coefficient data of the mth row in the first block.

26. A picture signal decoding method according to claim 25, wherein, where the m x n coefficient data of the first block are produced based on a difference from a predictive picture for which motion compensation has been performed in a frame predictive mode, when the absolute value sum J is equal to or greater than the absolute value sum M, a predictive picture for the second block is produced in a first frame predictive mode, but when the absolute value sum J is smaller than the absolute value sum M, a predictive picture for the second block is produced in a second frame predictive mode.

27. A picture signal decoding method according to claim 25, wherein, when the absolute value sum J is equal to or greater than the absolute value sum M, the first inverse orthogonal transformation mode is selected, but when the absolute value J is smaller than the absolute value sum M, the second inverse orthogonal transformation mode wherein N is equal to 1 is selected.

28. A picture signal decoding method according to claim 25, wherein, when the absolute value sum J is equal to or greater than the absolute value sum M, the first inverse orthogonal transformation mode is selected, but when the absolute value J is smaller than the absolute value sum M, the second inverse orthogonal transformation mode wherein N is equal to 2 is selected.

29. A picture signal decoding method according to any one of claims 25 to 28, wherein m is equal to n and j is equal to k.

30. A picture signal decoding method according to any one of claims 25 to 28, wherein the orthogonal transformation is a discrete cosine transform, and the inverse orthogonal transformation is an inverse discrete cosine transform.

31. A picture signal decoding method as claimed in claim 1, wherein
the sampling step comprises sampling out from m x n coefficient data of a first block formed by orthogonal transformation of picture element data of a frame formed from two fields and having an interlace structure, a second block including j x k coefficient data, j being smaller than m, k being smaller than n; and further comprising the step of
selecting, in accordance with information transmitted together with the coefficient data, one of a first inverse orthogonal transformation mode in which the coefficient data of the second block are transformed as they are by inverse orthogonal transformation and a second inverse orthogonal transformation mode in which the inverse orthogonal transformation is performed for data obtained by replacing successive ones of the coefficient data of the j-N + 1th to jth rows in the second block by corresponding ones of the coefficient data of the m-N+1th to mth rows in the corresponding columns, respectively, N being 1, 2, 3, ..., J-1.

32. A picture signal decoding method according to claim 31, wherein the information includes first motion information which represents a stopping condition and second motion information which represents some motion, and when the first motion information is detected, the first inverse orthogonal transformation mode is selected, but when the second motion information is detected, the second inverse orthogonal transformation mode wherein N is equal to 1 is selected.

33. A picture signal decoding method according to claim 31, wherein the information includes first motion information which represents a stopping condition and second motion information which represents some motion, and when the first motion information is detected, the first inverse orthogonal transformation mode is selected, but when the second motion information is detected, the second inverse orthogonal transformation mode wherein N is equal to 2 is selected.

34. A picture signal decoding method according to claim 31, wherein the information includes first motion information which represents a stopping condition, second motion information which represents small motion, and third motion information which represents great motion, and when the first motion information is detected, the first inverse orthogonal transformation mode is selected; when the second motion information is detected, the second inverse orthogonal transformation mode wherein N is equal to 1 is selected; and when the third motion information is detected, the second inverse orthogonal transformation mode wherein N is equal to 2 is selected.

35. A picture signal decoding method according to claim 31, wherein m is equal to n and j is equal to k.

36. A picture signal decoding method according to claim 35, wherein m and n are equal to 8, and j and k are equal to 4.

37. A picture signal decoding method according to any one of claims 31 to 36, wherein the orthogonal transformation is a discrete cosine transform, and the inverse orthogonal transformation is an inverse discrete cosine transform.

38. A picture signal coding apparatus, comprising:
orthogonal transformation means (56) for transforming picture element data of a frame formed from two fields and having an interlace structure by orthogonal transformation to form m x n coefficient data;
quantization means (57) for quantizing the coefficient data and outputting quantization data obtained by the quantization; and
variable length coding means (58) for coding the quantization data into variable length codes; characterised in that
the variable length coding means successively transmits the quantization data in the order of those coefficient data of a first quantization data group which correspond to j x k ones of the m x n coefficient data, j being smaller than m and k being smaller than n, those coefficient data of a second quantization data group which correspond to those of the m x n coefficient data which belong to the m-N+1th to mth rows in the first to kth columns, N being 1, 2, 3, ..., j-1, and those coefficient data of a third quantization data group which correspond to those of the m x n coefficient data which do not belong to any of the first and second quantization data groups.

39. A picture signal coding apparatus according to claim 38, wherein said variable length coding means includes means for adding end information to each of the second and third quantization data groups.

40. A picture signal coding apparatus according to claim 38. wherein m is equal to n and j is equal to k.

41. A picture signal coding apparatus according to claim 40, wherein m and n are equal to 8. and j and k are equal to 4.

42. A picture signal coding apparatus according to claim 38, wherein the orthogonal transformation is a discrete cosine transform.

43. A picture signal decoding apparatus for decoding transmission picture element data of a frame formed from two fields and having an interlace structure, the transmission picture element data being of the type obtained by using a coding method as defined in claim 58, the decoding apparatus comprising:
variable length decoding means (71) for decoding the transmission data by variable length decoding to obtain decoded data and outputting the decoded data; and
dequantization means (72, 81) for dequantizing the decoded data to obtain coefficient data and outputting the coefficient data;
sampling out means (82) for sampling out, from the coefficient data, j x k coefficient data obtained by replacing successive ones of the coefficient data of the jth row by replacement values dependent upon the successive coefficient of the mth row in the corresponding columns, j being smaller than m, k being smaller than n; and
inverse orthogonal transformation means (83) for transforming the j x k coefficient data sampled out by said sampling out means by inverse orthogonal transformation.

44. A picture signal decoding apparatus as claimed in claim 43, wherein the replacement values are the sums of the successive coefficient data for the jth row and corresponding ones of the coefficient data of the mth row in the corresponding column.

45. A picture signal decoding apparatus according to claim 43, wherein m is equal to n and j is equal to k.

46. A picture signal decoding apparatus according to any one of claims 43, 44 and 45, wherein the orthogonal transformation is a discrete cosine transform, and the inverse orthogonal transformation is an inverse discrete cosine transform.

47. A picture signal decoding apparatus as claimed in claim 43, comprising:
motion discrimination means (85) for discriminating motion between the two fields in the first block; and wherein
the sampling out means is responsive to a result of the discrimination by said motion discrimination means for selectively sampling out first j x k ones of the coefficient data, j being smaller than m, k being smaller than n, or second j x k coefficient data obtained by replacing successive ones of the coefficient data of the j-N+1th to jth rows by those of the coefficient data of the m-N+1th to mth rows in the corresponding columns, N being 1, 2, 3, ..., j-1.

48. A picture signal decoding apparatus according to claim 47, wherein said discrimination means includes means for calculating an absolute value sum J of the coefficient data of the jth line, means for calculating another absolute value sum M of the coefficient data of the mth row in columns corresponding to those of the coefficient data of the jth row, and means for comparing the absolute value sum J and the absolute value sum M with each other.

49. A picture signal decoding apparatus according to claim 48, wherein said sampling out means selects the first coefficient data when the absolute value sum J is equal to or greater than the absolute value sum M, but selects the second coefficient data wherein N is equal to 1 when the absolute value J is smaller than the absolute value sum M.

50. A picture signal decoding apparatus according to claim 48, wherein said sampling out means selects the first coefficient data when the absolute value sum J is equal to or greater than the absolute value sum M, but selects the second coefficient data wherein N is equal to 2 when the absolute value J is smaller than the absolute value sum M.

51. A picture signal decoding apparatus according to claim 47, wherein said motion discrimination means includes motion information detection means for detecting motion information included in the transmission data.

52. A picture signal decoding apparatus according to claim 51, wherein the information includes first motion information which represents a stopping condition and second motion information which represents some motion, and said sampling out means selects the first coefficient data when the first motion information is detected, but selects the second coefficient data wherein N is equal to 1 is selected when the second motion information is detected.

53. A picture signal decoding apparatus according to claim 51, wherein the information includes first motion information which represents a stopping condition and second motion information which represents some motion, and said sampling out means selects the first coefficient data when the first motion information is detected, but selects the second coefficient data wherein N is equal to 2 is selected when the second motion information is detected.

54. A picture signal decoding apparatus according to claim 51, wherein the information includes first motion information which represents a stopping condition, second motion information which represents small motion, and third motion information which represents great motion, and said sampling out means selects the first coefficient data when the first motion information is detected, but selects the second coefficient data wherein N is equal to 1 when the second motion information is detected, and otherwise selects the coefficient data wherein N is equal to 2 when the third motion information is detected.

55. A picture signal decoding apparatus according to claim 47, wherein m is equal to n and j is equal to k.

56. A picture signal decoding apparatus according to claim 55, wherein m and n are equal to 8, and j and k are equal to 4.

57. A picture signal decoding apparatus according to any one of claims 47 to 56, wherein the orthogonal transformation is discrete cosine transform, and the inverse orthogonal transformation is inverse discrete cosine transform.

58. A picture signal coding method, comprising the steps of:
transforming picture element data of a frame formed from two fields and having an interlace structure by orthogonal transformation to form m x n coefficient data;
quantizing the coefficient data and outputting quantization data obtained by the quantization; and
coding the quantization data into variable length codes; characterised in that the coding is in the order of those coefficient data of a first quantization data group which correspond to j x k ones of the m x n coefficient data, j being smaller than m, k being smaller than n, those coefficient data of a second quantization data group which correspond to those of the m x n coefficient data which belong to the m-N+1th to mth rows in the first to kth columns, N being 1, 2, 3, ..., j-1, and those coefficient data of a third quantization data group which correspond to those of the m x n coefficient data which do not belong to any of the first and second quantization data groups.

59. A picture signal coding method according to claim 58, wherein the quantization data after conversion into variable length codes are transmitted after end information is added to each of the second and third quantization data groups.

60. A picture signal coding method according to claim 58, wherein m is equal to n and j is equal to k.

61. A picture signal coding method according to any one of claims 58 to 60, wherein the orthogonal transformation is a discrete cosine transform.

## Patentansprüche

1. Bildsignal-Decodierverfahren zum Decodieren eines Signals des Typs, der durch ein Codierverfahren, wie es in Anspruch 58 definiert ist, erlangt wird, umfassend die Schritte:
Decodieren der Übertragungsdaten durch Variabellängen-Decodierung, so daß decodierte Daten erlangt werden, und Ausgeben der decodierten Daten; und
Dequantisieren der decodierten Daten, so daß Koeffizientendaten erlangt werden und Ausgeben der Koeffizientendaten;
Heraustasten der Koeffizientendaten niedriger Ordnung eines ersten Blocks (d0,0 bis d7,7), die durch Orthogonal-Transformation von Bildelementdaten gebildet sind, so daß die Koeffizientendaten eines zweiten Blocks (d0,0 bis d3,3) gebildet werden, wobei der zweite Block weniger Koeffizientendaten-Positionen als der erste Block enthält; **gekennzeichnet durch**
Ersetzen wenigstens einer der Koeffizientendaten (d3,0 bis d3,3) in dem zweiten Block durch einen Austauschwert abhängig von einem entsprechenden Wert oder entsprechenden Werten von den Koeffizientendaten (d7,0 bis d7,3) in dem ersten Block, jedoch außerhalb des zweiten Blocks; und
Ausführen einer Invers-Orthogonal-Transformation für die Koeffizientendaten des zweiten Blocks.

2. Bildsignal-Decodierverfahren gemäß Anspruch 1,
wobei der Austauschwert der entsprechende Wert oder die entsprechenden Werte der Koeffizientendaten in dem ersten Block ist.

3. Bildsignal-Decodierverfahren gemäß einem der Ansprüche 1 und 2,
wobei der erste Block m x n Koeffizientendaten (d0,0 bis d7,7) enthält, während der zweite Block j x k Koeffizientendaten (d0,0 bis d3,3) enthält, wobei j kleiner als m ist, k kleiner n ist und die Invers-Orthogonal-Transformation für Daten ausgeführt wird, die durch Ersetzen aufeinanderfolgender Werte der Koeffizientendaten der j-N+1-ten Zeile bis zu der j-ten Zeile in dem zweiten Block durch entsprechende Werte der Koeffizientendaten der m-N+1-ten Zeile bis zu der m-ten Zeile in den entsprechenden Spalten des ersten Blocks jeweils erlangt werden, wobei N gleich 1, 2, 3, ..., j-1 ist.

4. Bildsignal-Decodierverfahren gemäß einem der Ansprüche 1, 2 und 3,
wobei die Orthogonal-Transformation eine Diskret-Cosinus-Transformation ist und die Invers-Orthogonal-Transformation eine Invers-Diskret-Cosinus-Transformation ist.

5. Bildsignal-Decodierverfahren gemäß einem der Ansprüche 1, 2, 3 und 4,
wobei die Bildelementdaten Bildelementdaten eines Vollbildes sind, das aus zwei Halbbildern gebildet ist und das einen Verschachtelungsaufbau hat, und wobei die Koeffizientendaten des ersten Blocks basierend auf einer Differenz von einem vorhergesagten Bild erzeugt werden, für das eine Bewegungskompensation in einer Vollbildvorhersage-Betriebsart oder einer Halbbildvorhersage-Betriebsart ausgeführt worden ist, wobei die Bewegungskompensation in Abhängigkeit von einer Vorhersage-Betriebsart des ersten Blocks ausgeführt wird, um ein vorhergesagtes Bild für den zweiten Block zu erzeugen.

6. Bildsignal-Decodierverfahren gemäß Anspruch 5,
wobei, wenn die Koeffizientendaten des ersten Blocks basierend auf der Differenz von dem vorhergesagten Bild erzeugt worden sind, für das die Bewegungskompensation in der Vollbildvorhersage-Betriebsart ausgeführt worden ist, die Bewegungskompensation für den zweiten Block so ausgeführt wird, daß ein Halbbild der Bildelemente des vorhergesagten Bildes für den zweiten mit einem entsprechenden Halbbild der Bildelemente eines vorhergesagten Bildes für den ersten Block übereinstimmen kann.

7. Bildsignal-Decodierverfahren gemäß Anspruch 6,
wobei, wenn die Bildelemente des vorhergesagten Bildes für den ersten Block durch Interpolation aus der Bewegungskompensation erzeugt worden sind, auch entsprechende Bildelemente für das vorhergesagte Bild des zweiten Blocks durch Interpolation erzeugt werden.

8. Bildsignal-Decodierverfahren gemäß einem der Ansprüche 5 und 6,
wobei, wenn Bildelemente entsprechend den Bildelementen des vorhergesagten Bildes für den ersten Block in dem vorhergesagten Bild für den zweiten Block aufgrund der Bewegungskompensation vorhanden sind, die Bildelemente für die Bewegungskompensation verwendet werden.

9. Bildsignal-Decodierverfahren gemäß einem der Ansprüche 5 und 6,
wobei, wenn die Koeffizientendaten des ersten Blocks basierend auf der Differenz von dem vorhergesagten Bild erzeugt werden, für das die Bewegungskompensation in der Halbbildvorhersage-Betriebsart ausgeführt worden ist, die Bewegungskompensation für den zweiten Block so ausgeführt wird, daß die Positionen der Bildelemente des vorhergesagten Bildes für den zweiten Block mit den Positionen der entsprechenden Bildelemente für ein vorhergesagtes Bild für den ersten Block zusammenfallen können.

10. Bildsignal-Decodierverfahren gemäß Anspruch 1,
wobei der Austauschwert eine Summe oder Summen zumindest der Koeffizientendaten in dem zweiten Block und eines entsprechenden Werts oder entsprechender Werte der Koeffizientendaten in dem ersten Block ist.

11. Bildsignal-Decodierverfahren gemäß Anspruch 10,
wobei der erste Block m x n Koeffizientendaten enthält, während der zweite Block j x k Koeffizientendaten enthält, wobei j kleiner als m ist, k kleiner als n ist und die Invers-Orthogonal-Transformation für Daten ausgeführt wird, die durch Ersetzen aufeinanderfolgender Werte der Koeffizientendaten in der j-ten Zeile des zweiten Blocks durch eine Summe oder Summen zwischen den Koeffizientendaten der j-ten Zeile in dem zweiten Block und entsprechenden Werten der Koeffizientendaten in der m-ten Zeile des ersten Blocks in den jeweils entsprechenden Spalten.

12. Bildsignal-Decodierverfahren gemäß Anspruch 10,
wobei m gleich n ist und j gleich k ist.

13. Bildsignal-Decodierverfahren gemäß Anspruch 12,
wobei m und n gleich 8 sind und j und k gleich 4 sind.

14. Bildsignal-Decodierverfahren gemäß einem der Ansprüche 10 bis 13,
wobei die Orthogonal-Transformation eine Diskret-Cosinus-Transformation ist und die Invers-Orthogonal-Transformation eine Invers-Diskret-Cosinus-Transformation ist.

15. Bildsignal-Decodierverfahren gemäß einem der Ansprüche 10 bis 14,
wobei die Bildelementdaten Bildelementdaten für ein Vollbild sind, das aus zwei Halbbildern gebildet ist und das einen Verschachtelungsaufbau hat, und wobei die Koeffizientendaten des ersten Blocks basierend auf einer Differenz von einem vorhergesagten Bild erzeugt werden, für das eine Bewegungskompensation in einer Vollbildvorhersage-Betriebsart oder einer Halbbildvorhersage-Betriebsart aufgeführt worden ist, wobei die Bewegungskompensation in Abhängigkeit von einer Vorhersage-Betriebsart für den ersten Block ausgeführt wird, um ein vorhergesagtes Bild für den zweiten Block zu erzeugen.

16. Bildsignal-Decodierverfahren gemäß Anspruch 15,
wobei, wenn die Koeffizientendaten des ersten Blocks basierend auf der Differenz von dem vorhergesagten Bild erzeugt worden sind, für das die Bewegungskompensation in der Vollbildvorhersage-Betriebsart ausgeführt worden ist, die Bewegungskompensation für den zweiten Block so ausgeführt wird, daß ein Halbbild der Bildelemente des vorhergesagten Bildes für den zweiten Block mit einem entsprechenden Halbbild der Bildelemente eines vorhergesagten Bildes für den ersten Block übereinstimmen kann.

17. Bildsignal-Decodierverfahren gemäß Anspruch 16,
wobei, wenn die Bildelemente des vorhergesagten Bildes für den ersten Block durch Interpolation aus der Bewegungskompensation erzeugt worden sind, auch entsprechende Bildelemente für das vorhergesagte Bild des zweiten Blocks durch Interpolation erzeugt werden.

18. Bildsignal-Decodierverfahren gemäß einem der Ansprüche 15 und 16,
wobei, wenn Bildelemente entsprechend den Bildelementen des vorhergesagten Bildes für den ersten Block in dem vorhergesagten Bild für den zweiten Block aufgrund der Bewegungskompensation vorhanden sind, die Bildelemente für die Bewegungskompensation verwendet werden.

19. Bildsignal-Decodierverfahren gemäß einem der Ansprüche 15 und 16,
wobei, wenn die Koeffizientendaten des ersten Blocks basierend auf der Differenz von dem vorhergesagten Bild erzeugt werden, für das die Bewegungskompensation in der Halbbildvorhersage-Betriebsart ausgeführt worden ist, die Bewegungskompensation für den zweiten Block so ausgeführt wird, daß die Positionen der Bildelemente des vorhergesagten Bildes für den zweiten Block mit den Positionen der entsprechenden Bildelemente für ein vorhergesagtes Bild für den ersten Block übereinstimmen können.

20. Bildsignal-Decodierverfahren wie in Anspruch 1 beansprucht, wobei:
der Abtastschritt das Heraustasten von m x n Koeffizientendaten eines ersten Blocks, der durch Orthogonal-Transformation der Bildelementdaten eines Vollbildes gebildet wird, das aus zwei Halbbildern gebildet ist, und das einen Verschachtelungsaufbau hat, eines zweiten Blocks, der j x k Koeffizientendaten enthält, wobei j kleiner als m ist und k als n ist, umfaßt; und ferner umfassend die Schritte des
Diskriminierens der Bewegung zwischen den zwei Halbbildern des ersten Blocks; und
Auswählen in Abhängigkeit von einem Ergebnis der Diskrimination einer ersten Invers-Orthogonal-Transformations-Betriebsart, in der die Koeffizientendaten des zweiten Blocks wie sie sind durch Invers-Orthogonal-Transformation transformiert werden, oder einer zweiten Invers-Orthogonal-Transformations-Betriebsart, in der die Invers-Orthogonal-Transformation für Daten ausgeführt wird, die durch Ersetzen zumindest der Koeffizientendaten in dem zweiten Block durch einen entsprechenden Wert oder Werte der Koeffizientendaten in dem ersten Block, jedoch außerhalb des zweiten Blocks erlangt worden sind.

21. Bildsignal-Decodierverfahren gemäß Anspruch 20,
wobei m gleich n ist und j gleich k ist.

22. Bildsignal-Decodierverfahren gemäß Anspruch 21,
wobei m und n gleich 8 sind und j und k gleich 4 sind.

23. Bildsignal-Decodierverfahren gemäß einem der Ansprüche 20 bis 22,
wobei die Orthogonal-Transformation eine Diskret-Cosinus-Transformation ist und die Invers-Orthogonal-Transformation ein Invers-Diskret-Cosinus-Transformation ist.

24. Bildsignal-Decodierverfahren wie in Anspruch 1 beansprucht, wobei:
der Abtastschritt das Heraustasten aus m x n Koeffizientendaten eines ersten Blocks, der durch Orthogonal-Transformation der Bildelementdaten eines Vollbildes gebildet ist, der einen Verschachtelungsaufbau hat und aus zwei Halbbildern gebildet ist, eines zweiten Blocks, der j x k Koeffizientendaten beinhaltet, umfaßt, wobei j kleiner als m ist und k kleiner als n ist, und ferner umfassend die Schritte des
Diskriminierens der Bewegung zwischen den zwei Halbbildern des ersten Blocks; und
Auswählens in Abhängigkeit von einem Ergebnis der Diskrimination einer ersten Invers-Orthogonal-Transformations-Betriebsart, in der die Koeffizientendaten des zweiten Blocks wie sie sind durch Invers-Orthogonal-Transformation transformiert werden, oder einer zweiten Invers-Orthogonal-Transformations-Betriebsart, in der die Invers-Orthogonal-Transformation für Daten ausgeführt wird, die durch Ersetzen aufeinanderfolgender Werte der Koeffizientendaten der j-N+1-ten Zeile bis zu der j-ten Zeile in dem zweiten Block durch entsprechende Werte der Koeffizientendaten der m-N+1-ten Zeile bis zu der m-ten Zeile in den entsprechenden Spalten des ersten Blocks jeweils erlangt worden sind, wobei N gleich 1, 2, 3, ..., j-1 ist.

25. Bildsignal-Decodierverfahren gemäß Anspruch 24,
wobei die Bewegung zwischen den zwei Halbbildern aus einem Ergebnis des Vergleichs zwischen einer Absolutwertsumme J der Koeffizientendaten der j-ten Zeile in dem ersten Block und einer anderen Absolutwertsumme M der Koeffizientendaten in der m-ten Zeile in dem ersten Block diskriminiert wird.

26. Bildsignal-Decodierverfahren gemäß Anspruch 25,
wobei, wenn die m x n Koeffizientendaten des ersten Blockes basierend auf einer Differenz zu einem vorhergesagten Bild erzeugt worden sind, für das die Bewegungskompensation in einer Vollbild-Vorhersage-Betriebsart ausgeführt worden ist, wenn die Absolutwertsumme J größer oder gleich der Absolutwertsumme M ist, ein vorhergesagtes Bild für den zweiten Block in einer ersten Vollbild-Vorhersage-Betriebsart erzeugt wird, wobei jedoch, wenn die Absolutwertsumme J kleiner als die Absolutwertsumme M ist, ein vorhergesagtes Bild für den zweiten Block in einer zweiten Vollbild-Vorhersage-Betriebsart erzeugt wird.

27. Bildsignal-Decodierverfahren gemäß Anspruch 25,
wobei, wenn die Absolutwertsumme J größer oder gleich der Absolutwertsumme M ist, die erste Invers-Orthogonal-Transformations-Betriebsart gewählt wird, jedoch, wenn der Absolutwert J kleiner als die Absolutwertsumme M ist, die zweite Invers-Orthogonal-Transformations-Betriebsart gewählt wird, bei der N gleich 1 ist.

28. Bildsignal-Decodierverfahren gemäß Anspruch 25,
wobei, wenn die Absolutwertsumme J größer oder gleich der Absolutwertsumme M ist, die erste Invers-Orthogonal-Transformations-Betriebsart gewählt wird, jedoch, wenn der Absolutwert J kleiner als die Absolutwertsumme M ist, die zweite Invers-Orthogonal-Transformations-Betriebsart gewählt wird, bei der N gleich 2 ist.

29. Bildsignal-Decodierverfahren gemäß einem der Ansprüche 25 bis 28,
wobei m gleich n ist und j gleich k ist.

30. Bildsignal-Decodierverfahren gemäß einem der Ansprüche 25 bis 28,
wobei die Orthogonal-Transformation eine Diskret-Cosinus-Transformation ist, und die Invers-Orthogonal-Transformation eine Invers-Diskret-Cosinus-Transformation ist.

31. Bildsignal-Decodierverfahren wie in Anspruch 1 beansprucht, wobei:
der Abtastschritt das Heraustasten aus m x n Koeffizientendaten eines ersten Blocks, der durch Orthogonal-Transformation der Bildelementdaten eines Vollbildes gebildet wird, der aus zwei Halbbildern gebildet ist und der einen Verschachtelungsaufbau hat, eines zweiten Blocks, der j x k Koeffizientendaten enthält, wobei j kleiner als m ist und k als n ist, umfaßt; und ferner umfassend die Schritte des
Auswählens in Übereinstimmung mit Information, die zusammen mit den Koeffizientendaten übertragen worden ist, einer ersten Invers-Orthogonal-Transformations-Betriebsart, bei der die Koeffizientendaten des zweiten Blockes wie sie sind durch Invers-Orthogonal-Transformation transformiert werden, oder einer zweiten Invers-Orthogonal-Transformations-Betriebsart, bei der die Invers-Orthogonal-Transformation für Daten ausgeführt wird, die durch Ersetzen aufeinanderfolgender Werte der Koeffizientendaten von der j-N+1-ten bis zu der j-ten Zeile in dem zweiten Block durch entsprechende Werte der Koeffizientendaten der m-N+1-ten bis zu der m-ten Zeile in den entsprechenden Spalten jeweils erlangt worden sind, wobei N gleich 1, 2, 3, ..., j-1 ist.

32. Bildsignal-Decodierverfahren gemäß Anspruch 31,
wobei die Information erste Bewegungsinformation, die einen Stop-Zustand darstellt, und zweite Bewegungsinformation, die etwas Bewegung darstellt, beinhaltet und wenn die erste Bewegungsinformation detektiert wird, die erste Invers-Orthogonal-Transformations-Betriebsart gewählt wird, jedoch wenn die zweite Bewegungsinformation detektiert wird, die zweite Invers-Orthogonal-Transformations-Betriebsart, bei der N gleich 1 ist, gewählt wird.

33. Bildsignal-Decodierverfahren gemäß Anspruch 31,
wobei die Information erste Bewegungsinformation, die einen Stop-Zustand darstellt, und zweite Bewegungsinformation, die etwas Bewegung darstellt, beinhaltet, und wenn die erste Bewegungsinformation detektiert wird, die erste Invers-Orthogonal-Transformations-Betriebsart gewählt wird, jedoch, wenn die zweite Bewegungsinformation detektiert wird, die zweite Invers-Orthogonal-Transformations-Betriebsart, bei der N gleich 2 ist, gewählt wird.

34. Bildsignal-Decodierverfahren gemäß Anspruch 31,
wobei die Information erste Bewegungsinformation, die einen Stop-Zustand darstellt, zweite Bewegungsinformation, die eine kleine Bewegung darstellt, und dritte Beweungsinformation, die eine große Bewegung darstellt, beinhaltet, und wenn die erste Bewegungsinformation detektiert wird, die erste Invers-Orthogonal-Transformations-Betriebsart gewählt wird; wenn die zweite Bewegungsinformation detektiert wird, die zweite Invers-Orthogonal-Transformations-Betriebsart, bei der N gleich 1 ist, gewählt wird; und wenn die dritte Bewegungsinformation detektiert wird, die zweite Invers-Orthogonal-Transformations-Betriebsart, bei der N gleich 2 ist, gewählt wird.

35. Bildsignal-Decodierverfahren gemäß Anspruch 31,
wobei m gleich n ist und j gleich k ist.

36. Bildsignal-Decodierverfahren gemäß Anspruch 35,
wobei m und n gleich 8 sind und j und k gleich 4 sind.

37. Bildsignal-Decodierverfahren gemäß einem der Ansprüche 31 bis 36,
wobei die Orthogonal-Transformation eine Diskret-Cosinus-Transformation und die Invers-Orthogonal-Transformation eine Invers-Diskret-Cosinus-Transformation ist.

38. Bildsignal-Codiervorrichtung umfassend:
Orthogonal-Transformationsmittel (56) zum Transformieren von Bildelementdaten eines Vollbildes, das aus zwei Halbbildern gebildet ist und das einen Verschachtelungsaufbau besitzt, durch Orthogonal-Transformation, so daß m x n Koeffizientendaten gebildet werden; Quantisiermittel (57) zum Quantisieren der Koeffizientendaten und Ausgeben der Quantisierungsdaten, die durch die Quantisierung erlangt worden sind; und Variabellängen-Codiermittel (58) zum Codieren der Quantisierungsdaten in Codes variabler Länge, **dadurch gekennzeichnet**, daß
die Variabellängen-Codiermittel aufeinanderfolgend die Quantisierungsdaten in der Reihenfolge solcher Koeffizientendaten der ersten Quantisierungsdatengruppe, die den j x k Werten der m x n Koeffizientendaten entsprechen, wobei j kleiner als m und k kleiner als n ist, solcher Koeffizientendaten einer zweiten Quantisierungsdatengruppe, die solchen der m x n Koeffizientendaten entsprechen, die zu der m-N+1-ten bis m-ten Zeile in den ersten bis k-ten Spalten, wobei N gleich 1, 2, 3,..., j-1 ist, gehören, und solcher Koeffizientendaten einer dritten Quantisierungsdatengruppe, die solchen der m x n Koeffizientendaten entsprechen und die nicht zu irgendeiner der ersten und zweiten Quantisierungsdatengruppe gehören, übertragen.

39. Bildsignal-Codiervorrichtung gemäß Anspruch 38,
wobei das Variabellängen-Codiermittel Mittel zum Addieren der Endinformation zu jeder der zweiten und dritten Quantisierungsdatengruppe beinhaltet.

40. Bildsignal-Codiervorrichtung gemäß Anspruch 38,
wobei m gleich n ist und j gleich k ist.

41. Bildsignal-Codiervorrichtung gemäß Anspruch 40,
wobei m und n gleich 8 sind und j und k gleich 4 sind.

42. Bildsignal-Codiervorrichtung gemäß Anspruch 38,
wobei die Orthogonal-Transformation eine Diskret-Cosinus-Transformation ist.

43. Bildsignal-Decodiervorrichtung zum Decodieren von Übertragungs-Bildelementdaten eines Vollbildes, das aus zwei Halbbildern gebildet ist und das einen Verschachtelungsaufbau hat, wobei die Übertragungs-Bildelementdaten von dem Typ sind, der durch Verwendung eines Codierverfahrens, wie es in Anspruch 58 definiert ist, erlangt worden sind, wobei die Decodiervorrichtung umfaßt:
Variabellängen-Decodiermittel (71) zum Decodieren der Übertragungsdaten durch Decodierung variabler Länge, so daß decodierte Daten erlangt werden, und die decodierten Daten ausgegeben werden; und
Dequantisierungsmittel (72, 81) zum Dequantisieren der decodierten Daten, so daß Koeffizientendaten erlangt werden, und die Koeffizientendaten ausgegeben werden;
Heraustastmittel (82) zum Heraustasten aus den Koeffizientendaten, die j x k Koeffizientendaten, die durch Ersetzen aufeinanderfolgender Werte der Koeffizientendaten der j-ten Zeile durch Austauschwerte erlangt worden sind, die abhängig von aufeinanderfolgenden Koeffizienten der m-ten Zeile in der entsprechenden Spalte sind, wobei j kleiner als m und k kleiner als n ist; und
Invers-Orthogonal-Transformationsmittel (83) zum Transformieren der j x k Koeffizientendaten, die durch das Heraustastmittel durch Invers-Orthogonal-Transformation herausgetastet worden sind.

44. Bildsignal-Decodiervorrichtung wie in Anspruch 43 beansprucht,
wobei die Austauschwerte die Summen aufeinanderfolgender Koeffizientendaten der j-ten Zeile und entsprechende Werte der Koeffizientendaten der m-ten Zeile in der entsprechenden Spalte sind.

45. Bildsignal-Decodiervorrichtung gemäß Anspruch 43,
wobei m gleich n ist und j gleich k ist.

46. Bildsignal-Decodiervorrichtung gemäß einem der Ansprüche 43, 44 und 45, wobei die Orthogonal-Transformation eine Diskret-Cosinus-Transformation ist und die Invers-Orthogonal-Transformation eine Invers-Diskret-Cosinus-Transformation ist.

47. Bildsignal-Decodiervorrichtung wie in Anspruch 43 beansprucht, umfassend:
Bewegungs-Diskriminationsmittel (85) zum Diskriminieren der Bewegung zwischen zwei Halbbildern in dem ersten Block; und wobei
das Heraustastmittel abhängig von einem Ergebnis der Diskriminierung durch das Bewegungs-Diskriminationsmittel ist zum selektiven Heraustasten erster j x k Werte der Koeffizientendaten, wobei j kleiner als m ist und k kleiner als n ist, oder zweiter j x k Koeffizientendaten, die durch das Ersetzen entsprechender Werte der Koeffizientendaten der j-N+1-ten bis j-ten Zeile durch solche Koeffizientendaten der m-N+1-ten bis m-ten Zeile in den entsprechenden Spalten erlangt worden sind, wobei N gleich 1, 2, 3,..., j-1 ist.

48. Bildsignal-Decodiervorrichtung gemäß Anspruch 47,
wobei das Diskriminationsmittel Mittel zum Berechnen einer Absolutwertsumme J der Koeffizientendaten der j-ten Zeile, Mittel zum Berechnen einer anderen Absolutwertsumme M der Koeffizientendaten der m-ten Zeile in Spalten beinhaltet, die denen der Koeffizientendaten der j-ten Zeile entsprechen, und Mittel zum miteinander Vergleichen der Absolutwertsumme J und der Absolutwertsumme M beinhaltet.

49. Bildsignal-Decodiervorrichtung gemäß Anspruch 48,
wobei das Heraustastmittel die ersten Koeffizientendaten auswählt, wenn die Absolutwertsumme J größer oder gleich der Absolutwertsumme M ist, jedoch die zweiten Koeffizientendaten auswählt, bei denen N gleich 1 ist, wenn die Absolutwertsumme J kleiner als die Absolutwertsumme M ist.

50. Bildsignal-Decodiervorrichtung gemäß Anspruch 48,
wobei das Heraustastmittel die ersten Koeffizientendaten auswählt, wenn die Absolutwertsumme J größer oder gleich der Absolutwertsumme M ist, jedoch die zweiten Koeffizientendaten auswählt, bei denen N gleich 2 ist, wenn die Absolutwertsumme J kleiner als die Absolutwertsumme M ist.

51. Bildsignal-Decodiervorrichtung gemäß Anspruch 47,
wobei das Bewegungs-Diskriminationsmittel Bewegungsinformations-Detektionsmittel beinhaltet zum Detektieren von Bewegungsinformation, die in den Übertragungsdaten enthalten ist.

52. Bildsignal-Decodiervorrichtung gemäß Anspruch 51,
wobei die Information erste Bewegungsinformation, die einen Stop-Zustand beinhaltet, und zweite Bewegungsinformation, die etwas Bewegung darstellt, beinhaltet und das Heraustastmittel die ersten Koeffizientendaten auswählt, wenn die erste Bewegungsinformation detektiert worden ist, jedoch die zweiten Koeffizientendaten, bei denen N gleich 1 gewählt worden ist, auswählt, wenn die zweite Bewegungsinformation detektiert worden ist.

53. Bildsignal-Decodiervorrichtung gemäß Anspruch 51,
wobei die Information erste Bewegungsinformation, die einen Stop-Zustand darstellt, und zweite Bewegungsinformation, die etwas Bewegung darstellt, beinhaltet und das Heraustastmittel die ersten Koeffizientendaten auswählt, wenn die erste Bewegungsinformation detektiert worden ist, jedoch die zweiten Koeffizientendaten, bei denen N gleich 2 gewählt worden ist, auswählt, wenn die zweite Bewegungsinformation detektiert worden ist.

54. Bildsignal-Decodiervorrichtung gemäß Anspruch 51,
wobei die Information erste Bewegungsinformation, die einen Stop-Zustand darstellt, zweite Bewegungsinformation, die eine kleine Bewegung darstellt, und dritte Bewegungsinformation, die eine große Bewegung darstellt, beinhaltet und das Heraustastmittel die ersten Koeffizientendaten auswahlt, wenn die erste Bewegungsinformation detektiert worden ist, jedoch die zweiten Koeffizientendaten, bei denen N gleich 1 ist, auswählt, wenn die zweite Bewegungsinformation detektiert worden ist, und ansonsten die Koeffizientendaten, bei denen N gleich 2 ist, auswählt, wenn die dritte Bewegungsinformation detektiert worden ist.

55. Bildsignal-Decodiervorrichtung gemäß Anspruch 47,
wobei m gleich n ist und j gleich k ist.

56. Bildsignal-Decodiervorrichtung gemäß Anspruch 55,
wobei m und n gleich 8 sind und j und k gleich 4 sind.

57. Bildsignal-Decodiervorrichtung gemäß einem der Ansprüche 47 bis 56,
wobei die Orthogonal-Transformation eine Diskret-Cosinus-Transformation ist und die Invers-Orthogonal-Transformation eine Invers-Diskret-Cosinus-Transformation ist.

58. Bildsignal-Codierverfahren umfassend die Schritte:
Transformieren von Bildelementdaten eines Vollbildes, das aus zwei Halbbildern gebildet ist und das einen Verschachtelungsaufbau hat, durch Orthogonal-Transformation, um m x n Koeffizientendaten zu bilden;
Quantisieren der Koeffizientendaten und Ausgeben der Quantisierungsdaten, die durch die Quantisierung erlangt worden sind; und
Codieren der Quantisierungsdaten in Codes variabler Länge, **dadurch gekennzeichnet**, daß das Codieren in der Reihenfolge solcher Koeffizientendaten einer ersten Quantisierungsdatengruppe, die den j x k Werten der m x n Koeffizientendaten entsprechen, wobei j kleiner als m ist und k kleiner als n ist, solcher Koeffizientendaten einer zweiten Quantisierungsdatengruppe, die solchen der m x n Koeffizientendaten entspricht, die zu der m-N+1-ten bis m-ten Zeile in der ersten bis k-ten Spalte entspricht, wobei N gleich 1, 2, 3,..., j-1 ist, und solcher Koeffizientendaten einer dritten Quantisierungsdatengruppe erfolgt, die solchen der m x n Koeffizientendaten entspricht, die nicht zu einer der ersten und zweiten Quantisierungsdatengruppe gehört.

59. Bildsignal-Codierverfahren gemäß Anspruch 58,
wobei die Quantisierungsdaten nach Umsetzung in Codes variabler Länge übertragen werden, nachdem Endinformation zu jeder der zweiten und dritten Quantisierungsdatengruppe addiert worden ist.

60. Bildsignal-Codierverfahren gemäß Anspruch 58,
wobei m gleich n ist und j gleich k ist.

61. Bildsignal-Codierverfahren gemäß einem der Ansprüche 58 bis 60,
wobei die Orthogonal-Transformation eine Diskret-Cosinus-Transformation ist.

## Revendications

1. Un procédé de décodage de signal d'image pour décoder un signal du type obtenu par un procédé de codage qui est défini dans la revendication 58, comprenant les étapes suivantes :
on décode les données de transmission par décodage à longueur variable, pour obtenir des données décodées, et on émet les données décodées; et
on déquantifie les données décodées pour obtenir des données de coefficient et on émet les données de coefficient;
on échantillonne les données de coefficient d'ordre inférieur d'un premier bloc (d0,0 à d7,7) formé par transformation orthogonale des données d'élément d'image, pour former les données de coefficient d'un second bloc (d0,0 à d3,3), le second bloc contenant moins d'articles de données de coefficient que le premier bloc; caractérisé en ce que
on remplace l'une au moins des données de coefficient (d3,0 à d3,3) dans le second bloc par une valeur de remplacement qui dépend d'une ou de plusieurs correspondantes des données de coefficient (d7,0 à d7,3) dans le premier bloc, mais à l'extérieur du second bloc; et
on effectue une transformation orthogonale inverse pour les données de coefficient du second bloc.

2. Un procédé de décodage de signal d'image selon la revendication 1, dans lequel la valeur de remplacement dépend d'une ou de plusieurs correspondantes des données de coefficient dans le premier bloc.

3. Un procédé de décodage de signal d'image selon l'une quelconque des revendications 1 et 2, dans lequel le premier bloc comprend m × n données de coefficient (d0,0 à d7,7), tandis que le second bloc comprend j x k données de coefficient (d0,0 à d3,3), j étant inférieur à m, k étant inférieur à n, et la transformation orthogonale inverse étant effectuée pour des données obtenues en remplaçant des données successives parmi les données de coefficient de la (j-N+1)-ième ligne à la j-ième ligne dans le second bloc, par des données correspondantes parmi les données de coefficient de la (m-N+1)-ième ligne à la m-ième ligne dans les colonnes correspondantes du premier bloc, respectivement, N ayant les valeurs 1, 2, 3, ..., j-1.

4. Un procédé de décodage de signal d'image selon l'une quelconque des revendications 1, 2 et 3, dans lequel la transformation orthogonale est une transformation en cosinus discrète, et la transformation orthogonale inverse est une transformation en cosinus discrète inverse.

5. Un procédé de décodage de signal d'image selon l'une quelconque des revendications 1, 2, 3 et 4, dans lequel les données d'élément d'image sont des données d'élément d'image d'un intervalle d'image qui est formé par deux trames, et qui a une structure entrelacée, et dans lequel les données de coefficient du premier bloc sont produites sur la base d'une différence par rapport à une image de prédiction pour laquelle une compensation de mouvement a été effectuée dans un mode de prédiction d'intervalle d'image ou un mode de prédiction de trame, la compensation de mouvement étant effectuée en réponse à un mode de prédiction du premier bloc, pour produire une image de prédiction pour le second bloc.

6. Un procédé de décodage de signal d'image selon la revendication 5, dans lequel, lorsque les données de coefficient du premier bloc sont produites sur la base de la différencie par rapport à l'image de prédiction pour laquelle la compensation de mouvement a été effectuée dans le mode de prédiction d'intervalle d'image, la compensation de mouvement pour le second bloc est effectuée de façon qu'une trame d'éléments d'image de l'image de prédiction pour le second bloc puisse coïncider avec une trame correspondante d'éléments d'image d'une image de prédiction pour le premier bloc.

7. Un procédé de décodage de signal d'image selon la revendication 6, dans lequel, lorsque les éléments d'image de l'image de prédiction pour le premier bloc sont produits par interpolation au moment de la compensation de mouvement, des éléments d'image correspondants de l'image de prédiction pour le second bloc sont également produits par interpolation.

8. Un procédé de décodage de signal d'image selon l'une quelconque des revendications 5 et 6, dans lequel, lorsque des éléments d'image correspondant aux éléments d'image de l'image de prédiction pour le premier bloc sont présents dans l'image de prédiction pour le second bloc au moment de la compensation de mouvement, les éléments d'image sont utilisés pour la compensation de mouvement.

9. Un procédé de décodage de signal d'image selon l'une quelconque des revendications 5 et 6, dans lequel, lorsque les données de coefficient du premier bloc sont produites sur la base de la différence par rapport à l'image de prédiction pour laquelle la compensation d'un mouvement a été effectuée dans le mode de prédiction de trame, la compensation de mouvement pour le second bloc est effectuée de façon que les positions des éléments d'image de l'image de prédiction pour le second bloc puissent coïncider avec les positions d'éléments d'image correspondants d'une image de prédiction pour le premier bloc.

10. Un procédé de décodage de signal d'image selon la revendication 1, dans lequel la valeur de remplacement est une somme ou plusieurs sommes de la donnée ou des données de coefficient dans le second bloc, et de la donnée ou des données de coefficient correspondantes dans le premier bloc.

11. Un procédé de décodage de signal d'image selon la revendication 10, dans lequel le premier bloc comprend m × n données de coefficient, tandis que le second bloc comprend j × k données de coefficient, j étant inférieur à m, k étant inférieur à n, et la transformation orthogonale inverse est effectuée pour des données qui sont obtenues en remplaçant des données successives parmi les données de coefficient dans la j-ième ligne du second bloc, par une somme ou plusieurs sommes entre les données de coefficient de la j-ième ligne dans le second bloc et des données de coefficient correspondantes dans la m-ième ligne du premier bloc, dans les colonnes correspondantes respectives.

12. Un procédé de décodage de signal d'image selon la revendication 10, dans lequel m est égal à n et j est égal à k.

13. Un procédé de décodage de signal d'image selon la revendication 12, dans lequel m et n sont égaux à 8, et j et k sont égaux à 4.

14. Un procédé de décodage de signal d'image selon l'une quelconque des revendications 10 à 13, dans lequel la transformation orthogonale est une transformation en cosinus discrète, et la transformation orthogonale inverse est une transformation en cosinus discrète inverse.

15. Un procédé de décodage de signal d'image selon l'une quelconque des revendications 10 à 14, dans lequel les données d'élément d'image sont des données d'élément d'image d'un intervalle d'image qui est formé de deux trames et qui a une structure entrelacée, et dans lequel les données de coefficient du premier bloc sont produites sur la base d'une différence par rapport à une image de prédiction pour laquelle une compensation de mouvement a été effectuée dans un mode de prédiction d'intervalle d'image ou un mode de prédiction de trame, la compensation de mouvement étant effectuée en réponse à un mode de prédiction du premier bloc pour produire une image de prédiction pour le second bloc.

16. Un procédé de décodage de signal d'image selon la revendication 15, dans lequel, lorsque les données de coefficient du premier bloc sont produites sur la base de la différence par rapport à l'image de prédiction pour laquelle la compensation de mouvement a été effectuée dans le mode de prédiction d'intervalle d'image, la compensation de mouvement pour le second bloc est effectuée de façon qu'une trame d'éléments d'image de l'image de prédiction pour le second bloc puisse coïncider avec une trame correspondante d'éléments d'image d'une image de prédiction pour le premier bloc.

17. Un procédé de décodage de signal d'image selon la revendication 16, dans lequel, lorsque les éléments d'image de l'image de prédiction pour le premier bloc sont produits par interpolation au moment de la compensation de mouvement, des éléments d'image correspondants de l'image de prédiction pour le second bloc sont également produits par interpolation.

18. Un procédé de décodage de signal d'image selon l'une quelconque des revendications 15 et 16, dans lequel, lorsque des éléments d'image correspondant aux éléments d'image de l'image de prédiction pour le premier bloc sont présents dans l'image de prédiction pour le second bloc, au moment de la compensation de mouvement, les éléments d'image sont utilisés pour la compensation de mouvement.

19. Un procédé de décodage de signal d'image selon l'une quelconque des revendications 15 et 16, dans lequel, lorsque les données de coefficient du premier bloc sont produites sur la base de la différence par rapport à l'image de prédiction pour laquelle la compensation d'un mouvement a été effectuée dans le mode de prédiction de trame, la compensation de mouvement pour le second bloc est effectuée de façon que les positions des éléments d'image de l'image de prédiction pour le second bloc puissent coïncider avec les positions d'éléments d'image correspondants d'une image de prédiction pour le premier bloc.

20. Un procédé de décodage de signal d'image selon la revendication 1, dans lequel :
l'étape d'échantillonnage comprend l'échantillonnage, parmi m × n données de coefficient d'un premier bloc qui est formé par transformation orthogonale de données d'élément d'image d'un intervalle d'image formé de deux trames et ayant une structure entrelacée, d'un second bloc comprenant j × k données de coefficient, j étant inférieur à m et k étant inférieur à n; et comprenant en outre les étapes suivantes :
on effectue une discrimination de mouvement entre les deux trames du premier bloc; et
on sélectionne, en réponse à un résultat de la discrimination, un mode parmi un premier mode de transformation orthogonale inverse dans lequel les données de coefficient du second bloc sont transformées telles quelles par transformation orthogonale inverse, et un second mode de transformation orthogonale inverse dans lequel la transformation orthogonale inverse est effectuée pour des données qui sont obtenues en remplaçant l'une au moins des données de coefficient dans le second bloc par une ou plusieurs données de coefficient correspondantes dans le premier bloc, mais à l'extérieur du second bloc.

21. Un procédé de décodage de signal d'image selon la revendication 20, dans lequel m est égal à n et j est égal à k.

22. Un procédé de décodage de signal d'image selon la revendication 21, dans lequel m et n sont égaux à 8, et j et k sont égaux à 4.

23. Un procédé de décodage de signal d'image selon l'une quelconque des revendications 20 à 22, dans lequel la transformation orthogonale est une transformation en cosinus discrète, et la transformation orthogonale inverse est une transformation en cosinus discrète inverse.

24. Un procédé de décodage de signal d'image selon la revendication 1, dans lequel :
l'étape d'échantillonnage comprend l'échantillonnage, parmi m × n données de coefficient d'un premier bloc formé par transformation orthogonale des données d'élément d'image d'un intervalle d'image ayant une structure entrelacée formée de deux trames, d'un second bloc comprenant j × k données de coefficient, j étant inférieur à m et k étant inférieur à n; et comprenant en outre les étapes suivantes :
on effectue une discrimination de mouvement entre les deux trames du premier bloc; et
en réponse à un résultat de la discrimination, on sélectionne un mode parmi un premier mode de transformation orthogonale inverse dans lequel les données de coefficient du second bloc sont transformées telles quelles, par transformation orthogonale inverse, et un second mode de transformation orthogonale inverse dans lequel la transformation orthogonale inverse est effectuée pour des données qui sont obtenues en remplaçant des données successives parmi les données de coefficient de la (j-N+1)-ième ligne à la j-ième ligne dans le second bloc, par des données correspondantes parmi les données de coefficient de la (m-N+1)-ième à la m-ième ligne dans les colonnes correspondantes du premier bloc, respectivement, n ayant les valeurs 1, 2, 3,..., j-1.

25. Un procédé de décodage de signal d'image selon la revendication 24, dans lequel le mouvement entre les deux trames est discriminé à partir d'un résultat de comparaison entre une somme de valeurs absolues J des données de coefficient de la j-ième ligne dans le premier bloc, et une autre somme de valeurs absolues M des données de coefficient de la m-ième ligne dans le premier bloc.

26. Un procédé de décodage de signal d'image selon la revendication 25, dans lequel, dans le cas où m × n données de coefficient du premier bloc sont produites sur la base d'une différence par rapport à une image de prédiction pour laquelle une compensation de mouvement a été effectuée dans un mode de prédiction d'intervalle d'image, lorsque la somme de valeurs absolues J est supérieure ou égale à la somme de valeurs absolues M, une image de prédiction pour le second bloc est produite dans un premier mode de prédiction d'intervalle d'image, mais lorsque la somme de valeurs absolues J est inférieure à la somme de valeur absolues M, une image de prédiction pour le second bloc est produite dans un second mode de prédiction d'intervalle d'image.

27. Un procédé de décodage de signal d'image selon la revendication 25, dans lequel, lorsque la somme de valeurs absolues J est supérieure ou égale à la somme de valeurs absolues M, le premier mode de transformation orthogonale inverse est sélectionné, mais lorsque la somme de valeurs absolues J est inférieure à la somme de valeurs absolues M, le second mode de transformation orthogonale inverse, dans lequel N est égal à 1, est sélectionné.

28. Un procédé de décodage de signal d'image selon la revendication 25, dans lequel, lorsque la somme de valeurs absolues J est supérieure ou égale à la somme de valeurs absolues M, le premier mode de transformation orthogonale inverse est sélectionné, mais lorsque la somme de valeurs absolues J est inférieure à la somme de valeurs absolues M, le second mode de transformation orthogonale inverse, dans lequel N est égal à 2, est sélectionné.

29. Un procédé de décodage de signal d'image selon l'une quelconque des revendications 25 à 28, dans lequel m est égal à n et j est égal à k.

30. Un procédé de décodage de signal d'image selon l'une quelconque des revendications 25 à 28, dans lequel la transformation orthogonale est une transformation en cosinus discrète, et la transformation orthogonale inverse est une transformation en cosinus discrète inverse.

31. Un procédé de décodage de signal d'image selon la revendication 1, dans lequel :
l'étape d'échantillonnage comprend l'échantillonnage, parmi m × n données de coefficient d'un premier bloc qui est formé par transformation orthogonale des données d'élément d'image d'un intervalle d'image formé de deux trames et ayant une structure entrelacée, d'un second bloc comprenant j × k données de coefficient, j étant inférieur à m, k étant inférieur à n; et comprenant en outre l'étape suivante :
conformément à une information qui est transmise conjointement aux données de coefficient, on sélectionne un mode parmi un premier mode de transformation orthogonale inverse dans lequel les données de coefficient du second bloc sont transformées telles quelles par transformation orthogonale inverse, et un second mode de transformation orthogonale inverse dans lequel la transformation orthogonale inverse est effectuée pour des données qui sont obtenues en remplaçant des données successives parmi les données de coefficient de (j-N+1)-ième à j-ième lignes dans le second bloc, par des données correspondantes parmi les données de coefficient de (m-N+1)-ième à m-ième lignes dans les colonnes correspondantes, respectivement, n ayant les valeurs 1, 2, 3, ..., j-1.

32. Un procédé de décodage de signal d'image selon la revendication 31, dans lequel l'information comprend une première information de mouvement qui représente une condition d'arrêt, et une seconde information de mouvement qui représente un certain mouvement, et lorsque la première information de mouvement est détectée, le premier mode de transformation orthogonale inverse est sélectionné, mais lorsque la seconde information de mouvement est détectée, le second mode de transformation orthogonale inverse, dans lequel N est égal à 1, est sélectionné.

33. Un procédé de décodage de signal d'image selon la revendication 31, dans lequel l'information comprend une première information de mouvement qui représente une condition d'arrêt, et une seconde information de mouvement qui représente un certain mouvement, et lorsque la première information de mouvement est détectée, le premier mode de transformation orthogonale inverse est sélectionné, mais lorsque la seconde information de mouvement est détectée, le second mode de transformation orthogonale inverse, dans lequel N est égal à 2, est sélectionné.

34. Un procédé de décodage de signal d'image selon la revendication 31, dans lequel l'information comprend une première information de mouvement qui représente une condition d'arrêt, une seconde information de mouvement qui représente un petit mouvement, et une troisième information de mouvement qui représente un grand mouvement, et lorsque la première information de mouvement est détectée, le premier mode de transformation orthogonale inverse est sélectionné; lorsque la seconde information de mouvement est détectée, le second mode de transformation orthogonale inverse, dans lequel N est égal à 1, est sélectionné; et lorsque la troisième information de mouvement est détectée, le second mode de transformation orthogonale inverse, dans lequel N est égal à 2, est sélectionné.

35. Un procédé de décodage de signal d'image selon la revendication 31, dans lequel m est égal à n et j est égal à k.

36. Un procédé de décodage de signal d'image selon la revendication 35, dans lequel m et n sont égaux à 8, et j et k sont égaux à 4.

37. Un procédé de décodage de signal d'image selon l'une quelconque des revendications 31 à 36, dans lequel la transformation orthogonale est une transformation en cosinus discrète, et la transformation orthogonale inverse est une transformation en cosinus discrète inverse.

38. Un appareil de codage de signal d'image, comprenant :
des moyens de transformation orthogonale (56) pour transformer des données d'élément d'image d'un intervalle d'image formé de deux trames et ayant une structure entrelacée, par transformation orthogonale, pour former m × n données de coefficient;
des moyens de quantification (57) pour quantifier les données de coefficient et pour émettre des données de quantification qui sont obtenues par la quantification; et
des moyens de codage à longueur variable (58) pour coder les données de quantification en codes à longueur variable; caractérisé en ce que
les moyens de codage à longueur variable transmettent successivement les données de quantification dans l'ordre des données de coefficient d'un premier groupe de données de quantification qui correspondent à j × k des m × n données de coefficient, j étant inférieur à m et k étant inférieur à n, des données de coefficient d'un second groupe de données de quantification qui correspondent à celles des m × n données de coefficient qui appartiennent aux (m-N+1)-ième à m-ième lignes dans les première à k-ième colonnes, N ayant les valeurs 1, 2, 3, ..., j-1, et des données de coefficient d'un troisième groupe de données de quantification qui correspondent à celles des m × n données de coefficient qui n'appartiennent à aucun des premier et second groupes de données de quantification.

39. Un appareil de codage de signal d'image selon la revendication 38, dans lequel les moyens de codage à longueur variable comprennent des moyens pour ajouter une information de fin à chacun des second et troisième groupes de données de quantification.

40. Un appareil de codage de signal d'image selon la revendication 38, dans lequel m est égal à n et j est égal à k.

41. Un appareil de codage de signal d'image selon la revendication 40, dans lequel m et n sont égaux à 8, et j et k sont égaux à 4.

42. Un appareil de codage de signal d'image selon la revendication 38, dans lequel la transformation orthogonale est une transformation en cosinus discrète.

43. Un appareil de décodage de signal d'image pour décoder des données d'élément d'image de transmission d'un intervalle d'image formé de deux trames et ayant une structure entrelacée, les données d'élément d'image de transmission étant du type obtenu par l'utilisation d'un procédé de codage qui est défini dans la revendication 58, l'appareil de décodage comprenant :
des moyens de décodage à longueur variable (71) pour décoder les données de transmission par décodage à longueur variable, pour obtenir des données décodées et pour émettre les données décodées; et
des moyens de déquantification (72, 81) pour déquantifier les données codées, pour obtenir des données de coefficient, et pour émettre les données de coefficient;
des moyens d'échantillonnage (82) pour échantillonner, parmi les données de coefficient, j × k données de coefficient qui sont obtenues en remplaçant des données successives parmi les données de coefficient de la j-ième ligne par des valeurs de remplacement, dépendant des coefficients successifs de la m-ième ligne dans les colonnes correspondantes, j étant inférieur à m, k étant inférieur à n; et
des moyens de transformation orthogonale inverse (83) pour transformer par transformation orthogonale inverse les j × k données de coefficient qui sont échantillonnées par les moyens d'échantillonnage.

44. Un appareil de décodage de signal d'image selon la revendication 43, dans lequel les valeurs de remplacement sont les sommes de données de coefficient successives pour la j-ième ligne et de données correspondantes parmi les données de coefficient de la m-ième ligne dans la colonne correspondante.

45. Un appareil de décodage de signal d'image selon la revendication 43, dans lequel m est égal à n et j est égal à k.

46. Un appareil de décodage de signal d'image selon l'une quelconque des revendications 43, 44 et 45, dans lequel la transformation orthogonale est une transformation en cosinus discrète, et la transformation orthogonale inverse est une transformation en cosinus discrète inverse.

47. Un appareil de décodage de signal d'image selon la revendication 43, comprenant :
des moyens de discrimination de mouvement (85) pour effectuer une discrimination de mouvement entre les deux trames dans le premier bloc; et dans lequel
les moyens d'échantillonnage réagissent à un résultat de la discrimination qui est effectuée par les moyens de discrimination de mouvement, en échantillonnant sélectivement j × k premières données de coefficient, j étant inférieur à m, k étant inférieur à n, ou j × k secondes données de coefficient qui sont obtenues en remplaçant des données successives parmi les données de coefficient des (j-N+1)-ième à j-ième lignes par celles des données de coefficient des (m-N+1)-ième à m-ième lignes dans les colonnes correspondantes, n étant égal à 1, 2, 3,..., j-1.

48. Un appareil de décodage de signal d'image selon la revendication 47, dans lequel les moyens de discrimination comprennent des moyens pour calculer une somme de valeurs absolues J des données de coefficient de la j-ième ligne, des moyens pour calculer une autre somme de valeurs absolues M des données de coefficient de la m-ième ligne, dans des colonnes correspondant à celles des données de coefficient de la j-ième ligne, et des moyens pour comparer mutuellement la somme de valeurs absolues J et la somme de valeurs absolues M.

49. Un appareil de décodage de signal d'image selon la revendication 48, dans lequel les moyens d'échantillonnage sélectionnent les premières données de coefficient lorsque la somme de valeurs absolues J est supérieure ou égale à la somme de valeurs absolues M, mais ils sélectionnent les secondes données de coefficient, dans lesquelles N et égal à 1, lorsque la valeur absolue J est inférieure à la somme de valeurs absolues M.

50. Un appareil de décodage de signal d'image selon la revendication 48, dans lequel les moyens d'échantillonnage sélectionnent les premières données de coefficient lorsque la somme de valeurs absolues J est supérieure ou égale à la somme de valeurs absolues M, mais ils sélectionnent les secondes données de coefficient, dans lesquelles N est égal à 2, lorsque la valeur absolue J est inférieure à la somme de valeurs absolues M.

51. Un appareil de décodage de signal d'image selon la revendication 47, dans lequel les moyens de discrimination de mouvement comprennent des moyens de détection d'information de mouvement pour détecter une information de mouvement qui est incluse dans les données de transmission.

52. Un appareil de décodage de signal d'image selon la revendication 51, dans lequel l'information comprend une première information de mouvement qui représente une condition d'arrêt, et une seconde information de mouvement qui représente un certain mouvement, et les moyens d'échantillonnage sélectionnent les premières données de coefficient lorsque la première information de mouvement est détectée, mais ils sélectionnent les secondes données de coefficient, dans lesquelles N est égal à 1, lorsque la seconde information de mouvement est détectée.

53. Un appareil de décodage de signal d'image selon la revendication 51, dans lequel l'information comprend une première information de mouvement qui représente une condition d'arrêt, et une seconde information de mouvement qui représente un certain mouvement, et les moyens d'échantillonnage sélectionnent les premières données de coefficient lorsque la première information de mouvement est détectée, mais ils sélectionnent les secondes données de coefficient, dans lesquelles N est égal à 2, lorsque la seconde information de mouvement est détectée.

54. Un appareil de décodage de signal d'image selon la revendication 51, dans lequel l'information comprend une première information de mouvement qui représente une condition d'arrêt, une seconde information de mouvement qui représente un faible mouvement, et une troisième information de mouvement qui représente un grand mouvement, et les moyens d'échantillonnage sélectionnent les premières données de coefficient lorsque la première information de mouvement est détectée, mais ils sélectionnent les secondes données de coefficient, dans lesquelles N est égal à 1, lorsque la seconde information de mouvement est détectée, et ils sélectionnent par ailleurs les données de coefficient dans lesquelles N est égal à 2 lorsque la troisième information de mouvement est détectée.

55. Un appareil de décodage de signal d'image selon la revendication 47, dans lequel m est égal à n et j est égal à k.

56. Un appareil de décodage de signal d'image selon la revendication 55, dans lequel m et n sont égaux à 8, et j et k sont égaux à 4.

57. Un appareil de décodage de signal d'image selon l'une quelconque des revendications 47 à 56, dans lequel la transformation orthogonale est une transformation en cosinus discrète, et la transformation orthogonale inverse est une transformation en cosinus discrète inverse.

58. Un procédé de codage de signal d'image, comprenant les étapes suivantes :
on transforme, par transformation orthogonale, des données d'élément d'image d'un intervalle d'image formé de deux trames et ayant une structure entrelacée, pour former m × n données de coefficient;
on quantifie les données de coefficient et on émet des données de quantification qui sont obtenues par la quantification; et
on code les données de quantification en codes à longueur variable; caractérisé en ce que
le codage est effectué dans l'ordre des données de coefficient d'un premier groupe de données de quantification qui correspondent à j × k de m × n données de coefficient, j étant inférieur à m, k étant inférieur à n, des données de coefficient d'un second groupe de données de quantification qui correspondent à celles des m × n données de coefficient qui appartiennent aux (m-N+1)-ième à m-ième lignes dans les première à k-ième colonnes, N étant égal à 1, 2, 3, ..., j-1, et des données de coefficient d'un troisième groupe de données de quantification qui correspondent à celles de m × n données de coefficient qui n'appartiennent à aucun des premier et second groupes de données de quantification.

59. Un procédé de codage de signal d'image selon la revendication 58, dans lequel les données de quantification après conversion en codes à longueur variable sont transmises après qu'une information de fin a été ajoutée à chacun des second et troisième groupes de données de quantification.

60. Un procédé de codage de signal d'image selon la revendication 58, dans lequel m est égal à n et j est égal à k.

61. Un procédé de codage de signal d'image selon l'une quelconque des revendications 58 à 60, dans lequel la transformation orthogonale est une transformation en cosinus discrète.
